(19) Europäisches Patentamt / European Patent Office / Office européen des brevets

(11) **EP 2 533 537 A1**

(12) **EUROPEAN PATENT APPLICATION**

(43) Date of publication:
**12.12.2012 Bulletin 2012/50**

(51) Int Cl.:
*H04N 7/26* (2006.01)    *H04N 7/50* (2006.01)

(21) Application number: **11169587.0**

(22) Date of filing: **10.06.2011**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(71) Applicant: **Panasonic Corporation<br>Kadoma-shi<br>Osaka 571-8501 (JP)** | (72) Inventors:<br>• **Drugeon, Virginie<br>63225 Langen (DE)**<br>• **Narroschke, Matthias<br>63225 Langen (DE)**<br><br>(74) Representative: **Grünecker, Kinkeldey,<br>Stockmair & Schwanhäusser<br>Leopoldstrasse 4<br>80802 München (DE)** |

(54) **Transmission of picture size for image or video coding**

(57)    The present invention relates to image and/or video coding and decoding. In particular, the present invention relates to supporting any input image size of image input to the encoder even when the encoder works block-wisely and requires for the purposes of encoding an internal image size being an integer multiple of a predefined block size. In order to enable encoder and decoder working compatibly, the number of padding pixels inserted in the encoder is calculated in the same way at the encoder and the decoder. At the decoder, the calculated number of pixels is cropped from the decoded image. The calculation relies on the size of the image before padding and the size of a smallest coding unit (block), which are typically signaled within the bit-stream of the coded image/video.

## Fig. 4A

EP 2 533 537 A1

# Fig. 4B

400b

pad_right=1

440

2 SCUs

**Description**

The present invention relates to coding and decoding of an image and/or video signal. In particular, the present invention relates to determining the size of an image for the purpose of coding and decoding taking into account size of the coding units employed for coding and decoding.

BACKGROUND OF THE INVENTION

At present, the majority of standardized video coding algorithms are based on hybrid video coding. Hybrid video coding methods typically combine several different lossless and lossy compression schemes in order to achieve the desired compression gain. Hybrid video coding is also the basis for ITU-T standards (H.26x standards such as H. 261, H.263) as well as ISO/IEC standards (MPEG-X standards such as MPEG-1, MPEG-2, and MPEG-4). The most recent and advanced video coding standard is currently the standard denoted as H.264/MPEG-4 advanced video coding (AVC) which is a result of standardization efforts by joint video team (JVT), a joint team of ITU-T and ISO/IEC MPEG groups. A new standard is currently being developed by Joint Collaborative Team on Video Coding (JCT-VC) under a name High-Efficiency Video Coding (HEVC), aiming, in particular, at improvements of efficiency regarding the high-resolution video coding.

A video signal input to an encoder is a sequence of images called frames, each frame being a two-dimensional matrix of pixels. All the above-mentioned standards based on hybrid video coding include subdividing each individual video frame into smaller blocks (units) consisting of a plurality of pixels. The size of the blocks may vary, for instance, in accordance with the content of the image. The way of coding may be typically varied on a per block basis. The largest possible size for such a block varies. For instance in HEVC, it can be 64 x 64 pixels. In H.264/MPEG-4 AVC, a macroblock (usually denoting a block of 16 x 16 pixels) was the basic image element, for which the encoding is performed, with a possibility to further divide it in smaller subblocks to which some of the coding/decoding steps were applied. In HEVC, it is the largest coding unit (LCU). However, the coding and decoding in HEVC may also be performed for smaller coding units, for instance, for blocks of 4 x 4, 8 x 8, 16 x 16 etc.

Typically, the encoding steps of a hybrid video coding include a spatial and/or a temporal prediction. Accordingly, each block (unit) to be encoded is first predicted using either the blocks in its spatial neighborhood or blocks from its temporal neighborhood, i.e. from previously encoded video frames. A block of differences between the block to be encoded and its prediction, also called block of prediction residuals, is then calculated. Another encoding step is a transformation of a block of residuals from the spatial (pixel) domain into a frequency domain. The transformation aims at reducing the correlation between the samples of the input block. Further encoding step is quantization of the coefficients resulting from the transform. In this step the actual lossy (irreversible) compression takes place. Usually, the compressed transform coefficient values are further compacted (losslessly compressed) by means of an entropy coding. In addition, side information necessary for reconstruction of the encoded video signal is encoded and provided together with the encoded video signal. This is for example information about the spatial and/or temporal prediction, amount of quantization, etc.

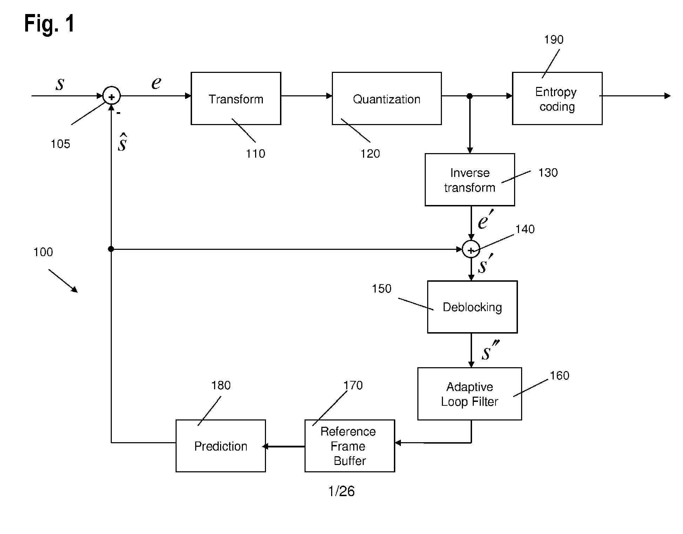

Figure 1 is an example of a typical H.264/MPEG-4 AVC and/or HEVC video encoder 100. A subtractor 105 first determines differences e between a current block to be encoded of an input video image (input signal s) and a corresponding prediction block $\hat{s}$, which is used as a prediction of the current block to be encoded. The prediction signal may be obtained by a temporal or by a spatial prediction 180. The type of prediction can be varied on a per frame basis or on a per block basis. Blocks and/or frames predicted using temporal prediction are called "inter"-encoded and blocks and/or frames predicted using spatial prediction are called "intra"-encoded. Prediction signal using temporal prediction is derived from the previously encoded images, which are stored in a memory. The prediction signal using spatial prediction is derived from the values of boundary pixels in the neighboring blocks, which have been previously encoded, decoded, and stored in the memory. The difference e between the input signal and the prediction signal, denoted prediction error or residual, is transformed 110 resulting in coefficients, which are quantized 120. Entropy encoder 190 is then applied to the quantized coefficients in order to further reduce the amount of data to be stored and/or transmitted in a lossless way. This is mainly achieved by applying a code with code words of variable length wherein the length of a code word is chosen based on the probability of its occurrence.

Within the video encoder 100, a decoding unit is incorporated for obtaining a decoded (reconstructed) video signal s'. In compliance with the encoding steps, the decoding steps include dequantization and inverse transformation 130. The so obtained prediction error signal e' differs from the original prediction error signal due to the quantization error, called also quantization noise. A reconstructed image signal s' is then obtained by adding 140 the decoded prediction error signal e' to the prediction signal $\hat{s}$. In order to maintain the compatibility between the encoder side and the decoder side, the prediction signal $\hat{s}$ is obtained based on the encoded and subsequently decoded video signal which is known at both sides the encoder and the decoder.

Due to the quantization, quantization noise is superposed to the reconstructed video signal. Due to the block-wise coding, the superposed noise often has blocking characteristics, which result, in particular for strong quantization, in visible block boundaries in the decoded image. Such blocking artifacts have a negative effect upon human visual perception. In order to reduce these artifacts, a deblocking filter 150 is applied to every reconstructed image block. Deblocking filter generally smoothes the block edges leading to an improved subjective quality of the decoded images. Moreover, since the filtered part of an image is used for the motion compensated prediction of further images, the filtering also reduces the prediction errors, and thus enables improvement of coding efficiency.

After a deblocking filter, an adaptive loop filter 160 may be applied to the image including the already deblocked signal. Whereas the deblocking filter improves the subjective quality, ALF aims at improving the pixel-wise fidelity ("objective" quality). In particular, adaptive loop filter (ALF) is used to compensate image distortion caused by the compression. ALF can be applied to the entire frame (image of the video sequence) or to local areas (blocks). An additional side information indicating which areas are to be filtered may be transmitted (block-based, frame-based or quadtree-based).

In order to be decoded, inter-encoded blocks require also storing the previously encoded and subsequently decoded portions of image(s) in the reference frame buffer 170. An inter-encoded block is predicted 180 by employing motion compensated prediction. First, a best-matching block is found for the current block within the previously encoded and decoded video frames by a motion estimator. The best-matching block then becomes a prediction signal and the relative displacement (motion) between the current block and its best match is then signalized as motion data in the form of three-component motion vectors within the side information provided together with the encoded video data. The three components consist of two spatial components and one temporal component. In order to optimize the prediction accuracy, motion vectors may be determined with a spatial sub-pixel resolution e.g. half pixel or quarter pixel resolution. A motion vector with spatial sub-pixel resolution may point to a spatial position within an already decoded frame where no real pixel value is available, i.e. a sub-pixel position. Hence, spatial interpolation of such pixel values is needed in order to perform motion compensated prediction. This may be achieved by an interpolation filter (in Figure 1 integrated within Prediction block 180).

For both, the intra- and the inter-encoding modes, the differences e between the current input signal and the prediction signal are transformed 110 and quantized 120, resulting in the quantized coefficients. Generally, an orthogonal transformation such as a two-dimensional discrete cosine transformation (DCT) or an integer version thereof is employed since it reduces the correlation of the natural video images efficiently. After the transformation, lower frequency components are usually more important for image quality than high frequency components so that more bits can be spent for coding the low frequency components than the high frequency components. In the entropy coder, the two-dimensional matrix of quantized coefficients is converted into a one-dimensional array. Typically, this conversion is performed by a so-called zig-zag scanning, which starts with the DC-coefficient in the upper left corner of the two-dimensional array and scans the two-dimensional array in a predetermined sequence ending with an AC coefficient in the lower right corner. As the energy is typically concentrated in the left upper part of the two-dimensional matrix of coefficients, corresponding to the lower frequencies, the zig-zag scanning results in an array where usually the last values are zero. This allows for efficient encoding using run-length codes as a part of/before the actual entropy coding.

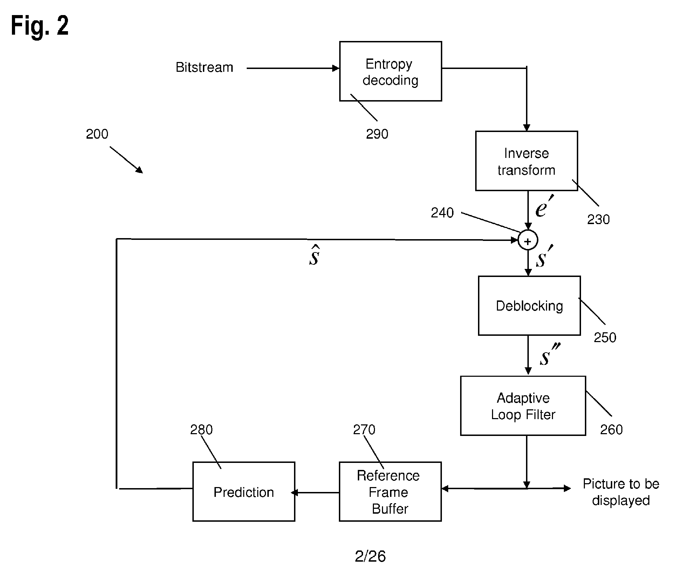

Figure 2 illustrates an example decoder 200 according to the H.264/MPEG-4 AVC or HEVC video coding standard. The encoded video signal (input signal to the decoder) first passes to entropy decoder 290, which decodes the quantized coefficients, the information elements necessary for decoding such as motion data, mode of prediction etc. The quantized coefficients are inversely scanned in order to obtain a two-dimensional matrix, which is then fed to inverse quantization and inverse transformation 230. After inverse quantization and inverse transformation 230, a decoded (quantized) prediction error signal e' is obtained, which corresponds to the differences obtained by subtracting the prediction signal from the signal input to the encoder in the case no quantization noise is introduced and no error occurred.

The prediction signal is obtained from either a temporal or a spatial prediction 280. The decoded information elements usually further include the information necessary for the prediction such as prediction type in the case of intra-prediction and motion data in the case of motion compensated prediction. The quantized prediction error signal in the spatial domain is then added with an adder 240 to the prediction signal obtained either from the motion compensated prediction or intra-frame prediction 280. The reconstructed image may be passed through a deblocking filter 250 and an adaptive loop filter 260 and the resulting decoded signal is stored in the memory 270 to be applied for temporal or spatial prediction of the following blocks/images.

Summarizing, standardized hybrid video coders, e.g. H.264/MPEG-4 AVC or HEVC, are used to code image signals of more than one color component (like YUV, YCbCr, RGB, RGBA, etc). For the purpose of prediction, the current image to be coded is divided into blocks. It is possible to use blocks of different sizes. The applied block sizes are coded and transmitted. Standardized video coders typically apply rectangular blocks with a minimum block size, e.g. of 4x4 samples.

The H.264/MPEG-4 AVC as well as the HEVC standards include two functional layers, a Video Coding Layer (VCL) and a Network Abstraction Layer (NAL). The VCL provides the encoding functionality as briefly described above.

The NAL encapsulates syntax elements into standardized units called NAL units according to their further application such as transmission over a channel or storing in storage. The syntax elements are, for instance, the encoded prediction error signal or other information necessary for the decoding of the video signal such as type of prediction, quantization parameter, motion vectors, etc. There are VCL NAL units containing the compressed video data and the related information, as well as non-VCL units encapsulating additional data such as parameter sets relating to an entire video sequence or to its parts, or a Supplemental Enhancement Information (SEI) providing additional information that can be used to improve the decoding performance. Other non-VCL NALUs are, for instance Picture Parameter Set (PPS) and Sequence Parameter Set (SPS) as described in ITU-T and ISO/IEC "Advanced video coding for generic audiovisual services", ITU-T recommendation H.264 and ISO/IEC 14496-10 (MPEG4 AVC), sections 7.3.2.1 and 7.3.2.2. or in JCTVC-E603, sections 7.3.2.1 and 7.3.2.2 for HEVC.

The PPS includes information related to a picture. The SPS contains various pieces of information relating to the video sequence. For instance, it includes information about the size of the pictures of the sequence to be coded. In H.264/MPEG4 AVC, the vertical and horizontal size of the pictures is transmitted in number of macroblocks (blocks of 16 x 16 pixels), therefore forcing the internal size of the pictures to be a multiple of the macroblock size. If a source of image has a resolution that is not a multiple of 16x16, the encoder may be instructed to pad a portion of the buffer to obtain an image size multiple of 16 x 16. Accordingly, cropping data is embedded into the SPS (Sequence Parameter Set) in order to signal which part of the pictures is relevant, i.e. corresponding to the input signal from encoder. Compared to H.264/MPEG4 AVC, HEVC signals the picture size using the number of luma samples, therefore signaling any possible input image sizes. However, the coding still remains block-wise with blocks (units) of possibly variable sizes. Therefore, the internal size of the pictures in the encoder and decoder has to be a multiple of the coding block size.

SUMMARY OF THE INVENTION

The aim of the present invention is to provide an efficient approach to determination of the internal size of the image based on signaled data.

This is achieved by the subject matter of the independent claims.

Advantageous embodiments of the invention are subject to the dependent claims.

It is the particular approach of the present invention to derive the number of pixels for padding of a digital image from the size of the image and the size of the smallest coding unit so that the padded image size is an integer multiple of a smallest coding unit.

Such deriving may be performed at both the encoder and the decoder in a similar way. It does not require signaling of any additional data such as number of padding pixels. Thus, it provides an efficient way of handling images with any sizes, which may differ from the internal sizes used for coding such images.

In accordance with a first aspect of the present invention, a method is provided for coding a digital image divided to a plurality of coding units, each coding unit including a plurality of pixels, the method comprising the steps of determining the size of a digital image to be coded; calculating a number of padding rows and/or columns of pixels for padding the digital image so that the padded image size is an integer-multiple of a size of the smallest coding unit; padding the digital image with the calculated number of padding rows and/or columns of pixels; coding the padded image; embedding into the bit stream the original size of the input digital image (size before padding); and embedding into the bit-stream the size of a smallest coding unit.

In accordance with another aspect of the present invention, a method is provided for decoding a bit-stream including a digital image divided to a plurality of coding units, each coding unit including a plurality of pixels, the method comprising the steps of extracting from the bit-stream a size of the image; extracting from the bit-stream a size of a smallest coding unit; calculating a number of padding rows and/or columns of pixels so that the padded image size is an integer-multiple of the size of the smallest coding unit; decoding the padded image and cropping the decoded image by the calculated number of padding rows and/or columns of pixels.

In accordance with another aspect of the present invention, an apparatus is provided for coding a digital image divided to a plurality of coding units, each coding unit including a plurality of pixels the apparatus comprising a padding calculation unit for determining a size of a digital image to be coded and for calculating a number of padding rows and/or columns of pixels for padding the digital image so that the padded image size is an integer-multiple of a size of the smallest coding unit; a padding unit for padding the digital image with the calculated number of padding rows and/or columns of pixels; an image coder for coding the padded image; and a bit-stream forming unit for embedding into the bit stream the original size of the input digital image (size before padding) and the size of a smallest coding unit.

In accordance with another aspect of the present invention, an apparatus is provided for decoding a bit-stream including a digital image divided to a plurality of coding units, each coding unit including a plurality of pixels, the apparatus comprising: a bit-stream parsing unit for extracting from the bit-stream a size of the image and a size of a smallest coding unit; a padding calculation unit for calculating a number of padding rows and/or columns of pixels for padding the digital image so that the padded image size is an integer-multiple of the size of the smallest coding unit; an image decoder for decoding the padded image; and a cropping unit for cropping the decoded digital image by the calculated number of padding rows and/or columns of pixels.

The size of the image includes a vertical and a horizontal size of the image. Advantageously, both sizes are indicated in the bitstream. A coding unit may also have different vertical and horizontal size. Alternatively, it may also be a square. Thus, padding may be also performed in vertical direction, by padding rows of pixels to a horizontal border of the image or in horizontal direction, by padding columns of pixels to a vertical border of the image. The padding may be performed only in either vertical or horizontal direction, or in both directions. Correspondingly, only a number of padding rows, or only a number of padding columns, or both the number of padding rows and padding columns may be calculated / determined. In this document "line" refers to row or column and "size" refers to any of vertical or horizontal or both sizes.

In accordance with an embodiment of the present invention, the calculation at the encoder side further includes determining a number of padding smallest coding units, calculating a number of padding rows and/or columns of pixels being at least equal to the determined number of padding smallest coding units multiplied by the size of the smallest coding unit, and embedding the determined number of padding smallest coding units into the bit-stream.

In particular, when the number of padding lines (rows or columns) is higher than or equal to the size (vertical or horizontal depending on whether vertical or horizontal padding is concerned) of the smallest coding unit, the number of padding smallest coding units which are completely contained in the number of padding lines is signaled. At the decoder the number of padding lines is then calculated as the signaled number of padding SCUs multiplied by the size of the SCU plus a number of lines remaining in order to obtain a padded image size being a multiple of the size of the smallest coding unit (in vertical or horizontal direction respectively).

In other words, the encoder determines a subdivision of the image into coding units and based thereon calculates the number of padding lines of the image as a difference between the image size and the lines of the coding units determined by the subdivision. The number of padding smallest coding units is then calculated as a result of integer division of the number of padding lines by the size of the smallest coding unit.

At the decoder, the number of padding lines can be uniquely reconstructed by multiplying the signaled number of padding smallest coding units with the signaled smallest coding unit size and adding thereto a number of lines obtainable as a difference between the signaled size of the smallest coding unit and a remainder of integer division of the picture size by the size of the smallest coding unit.

Correspondingly, at the decoder side, the number of padding smallest coding units is extracted from the bit-stream, wherein the number of padding rows and/or columns of pixels for padding the digital image is calculated as being at least equal to the extracted number of padding smallest coding units multiplied by the size of the smallest coding unit.

In accordance with another embodiment of the present invention, by the encoder a flag is embedded into the bit-stream, indicating to which of at least one of the left, right, top, and/or bottom side of the image the calculated number of padding rows and/or columns is to be padded.

Correspondingly at the decoder, the flag is extracted from the bit-stream and the number of padding rows and/or columns of pixels for padding the digital image is padded to the indicated at least one of the left, right, top, and/or bottom side of the image.

However, in accordance with another embodiment of the present invention it may be assumed that only padding on the bottom and the right side of the image is performed. Accordingly, the embedding into or extracting from the bit-stream is performed only for a number of padding rows and columns to be padded to the respective right and bottom image boundary. Then, a predefined convention for cropping the calculated number of padding rows and columns may be used as described above to determine the number of rows/columns to be padded based on the image size and on the size of the smallest coding unit. This approach provides high efficiency since it does not require any additional signaling for the purposes of the padding and enables encoder and decoder to work in the same way.

According to yet another embodiment of the present invention, the flag and/or the number of padding smallest coding units is embedded within the bitstream as a part of a picture specific parameter set or a sequence specific parameter set.

In accordance with still another aspect of the present invention, a computer program product comprising a computer readable medium storing instructions that, when executed by the processor, perform any of the above described methods.

The above and other objects and features of the present invention will become more apparent from the following description and preferred embodiments given in conjunction with the accompanying drawings in which:

Figure 1        is a block diagram illustrating an example of a conventional video encoder;

Figure 2        is a block diagram illustrating an example of a conventional video decoder;

Figure 3    is a schematic drawing illustrating an example of subdivision of a picture into a plurality of differently sized coding units;

Figure 4A    is a schematic drawing illustrating padding with a number of pixels equal to the minimum number of padding pixels necessary to code the image;

Figure 4B    is a schematic drawing illustrating padding with a number of pixels higher than the minimum number of padding pixels necessary to code the image;

Figure 5    is a flow diagram illustrating image decoding in accordance with the present invention;

Figure 6    is a flow diagram illustrating image coding in accordance with the present invention;

Figure 7    is a block diagram schematically illustrating functional blocks of a decoder according to the present invention;

Figure 8    is a block diagram schematically illustrating functional blocks of a coder according to the present invention;

Figure 9    is a schematic drawing illustrating an overall configuration of a content providing system for implementing content distribution services;

Figure 10    is a schematic drawing illustrating an overall configuration of a digital broadcasting system;

Figure 11    is a block diagram illustrating an example of a configuration of a television;

Figure 12    is a block diagram illustrating an example of a configuration of an information reproducing/recording unit that reads and writes information from or on a recording medium that is an optical disk;

Figure 13    is a schematic drawing showing an example of a configuration of a recording medium that is an optical disk;

Figure 14A    is a schematic drawing illustrating an example of a cellular phone;

Figure 14B    is a block diagram showing an example of a configuration of the cellular phone;

Figure 15    is a schematic drawing showing a structure of multiplexed data;

Figure 16    is a drawing schematically illustrating how each of the streams is multiplexed in multiplexed data;

Figure 17    is a schematic drawing illustrating how a video stream is stored in a stream of PES packets in more detail;

Figure 18    is a schematic drawing showing a structure of TS packets and source packets in the multiplexed data;

Figure 19    is a schematic drawing showing a data structure of a PMT;

Figure 20    is a schematic drawing showing an internal structure of multiplexed data information;

Figure 21    is a schematic drawing showing an internal structure of stream attribute information;

Figure 22    is a schematic drawing showing steps for identifying video data;

Figure 23    is a schematic block diagram illustrating an example of a configuration of an integrated circuit for implementing the video coding method and the video decoding method according to each of embodiments;

Figure 24    is a schematic drawing showing a configuration for switching between driving frequencies;

Figure 25    is a schematic drawing showing steps for identifying video data and switching between driving frequencies;

Figure 26    is a schematic drawing showing an example of a look-up table in which the standards of video data are associated with the driving frequencies;

Figure 27A    is a schematic drawing showing an example of a configuration for sharing a module of a signal processing unit, and

Figure 27B    is a schematic drawing showing another example of a configuration for sharing a module of a signal processing unit.

DETAILED DESCRIPTION

The size of the images of the video sequence to be encoded may be set at the encoder. The size is then typically embedded into the bit-stream containing coded image data. The bit-stream has a predefined format in which the information is embedded so that it can be understood in the same way at the encoder and the decoder. The decoder decodes the coded images from the bit-stream accordingly. For instance, in H.264/MPEG-4 AVC, the size of the images is signaled within a non-VCL NALU including a sequence parameter set (SPS), which is typically provided at the beginning of the bit-stream. There can be several SPS provided per coded video sequence but only one SPS only is typically active for an entire coded video sequence. In H.264/MPEG-4 AVC, a coded video sequence is defined to begin at each IDR picture (cf. H.264/MPEG-4 AVC standard Section 7.4.1.2.1).

The size of an image (a still image or an image of a video sequence) is typically signaled by means of a vertical size and a horizontal size of the image. The vertical and the horizontal size of the image may be expressed in different units. For instance, H.264/MPEG-4 AVC indicates the size of the pictures in terms of the number of macroblocks, i.e., coding units of size 16 x 16. Before coding, the picture is typically partitioned into blocks of fixed sizes, thus forcing the internal size of the pictures to be a multiple of the coding block (unit) size. When an input image has a size which is not an integer multiple of the predefined coding unit (such as macroblock), the internal coding size of the pictures inside the encoder may differ from the actual size of the input picture. The decoder should render the image in the size corresponding to the input image coded at the encoder side rather than in the size of the internal representation. Therefore, also at the decoder, the internal coding size may differ from the size of the decoded picture to be rendered (displayed).

In order to keep the input image size flexible and compatible at both the encoder and the decoder, cropping data is indicated within the bit-stream for specifying which part of the picture is relevant, i.e., which part of the picture corresponds to the original input image. This is indicated by means of the number of rows to be padded (added) to a bottom or a top side of the picture and/or by means of the number of columns to be padded to a right or a left side of the picture. The rows and columns refer here to rows and columns of pixels, respectively.

The HEVC standard is not limited to macroblock as a generic coding unit. Rather, the pictures are partitioned into Largest Coding Units (LCU), which are further recursively partitioned into smaller Coding Units (CUs). The CUs in HEVC may have sizes corresponding to an integer power of two (such as 128, 64, 32, 26, or 8). The size of the smallest allowable CU for a given coded sequence is sent in the SPS. The internal size of the pictures is constrained to be always a multiple of the smallest CU (SCU) size.

In addition, HEVC does not signal the size of the image in number of blocks. The size of the pictures is currently signaled in number of luminance samples (since the chrominance components may be sub-sampled, as for instance in the case of YUV format 4:2:2 or 4:2:0). Some image sizes are not allowed. Furthermore, the number of padding pixels at the bottom and at the right border of the pictures is indicated.

The present invention aims at providing a more efficient way of indicating in the bitstream information that is necessary to determine both the internal and the original size of the image and to corresponding determining of the internal and the original image sizes.

The present invention is based on the observation that it is redundant to indicate in the bit-stream a picture size in terms of the number of luminance samples and the number of padding pixels. Accordingly, the size of the pictures is signaled in number of luminance samples (pixels). This size is not necessarily a multiple of the smallest CU size, which is also transmitted within the syntax of the bit-stream. After reading the size of the smallest CU, the number of padding pixels necessary in order to have an internal size that is a multiple of the signaled smallest CU size is automatically calculated in the same way at encoder and decoder. Thus, no additional padding information needs to be embedded into the bit-stream in order to unambiguously determine the size of the picture. Here is assumed that the number of padding lines/rows of pixels is not higher than the size in pixels of the smallest coding unit, i.e. only the minimum number of pixels necessary to have an internal picture size that is a multiple of the size of the smallest coding unit is padded.

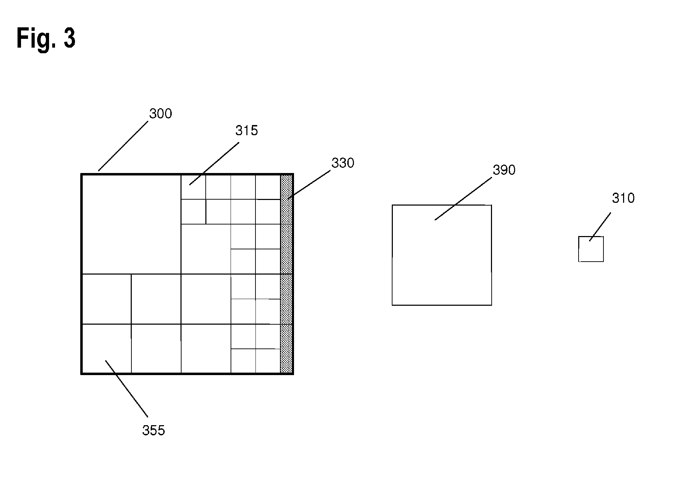

Figure 3 illustrates the necessity of padding pixels on an example picture 300. In particular, Figure 3 illustrates a picture 300 and shows an example of a relative size of the smallest coding unit 310 and the largest coding unit 390. Picture 300 is subdivided into coding units of different sizes such as coding unit 315 of the smallest possible size or coding unit 355 larger than the SCU but smaller than the LCU. Any CU sizes from the range between and including SCU and LCU are possible. The SCU and LCU sizes allowed for the pictures of one coded sequence are signaled in the Sequence Parameter Set (SPS). In case of HEVC, only sizes of CUs being an integer power of two between 8 and 128 are allowed. The signaled SCU and LCU sizes in the SPS must belong to that range. Nevertheless, in general, coding units of different sizes and/or shapes may be allowed in other codecs for which the present invention may also be applicable. Moreover, in HEVC, a CU of any size must be square-shaped. Automatic splitting of CUs into smaller CUs may be used at pictures boundaries. However, a CU may only be split if its size is bigger than the smallest coding unit size. As can be seen from Figure 3, without padding the picture 300, after dividing it into coding units, the columns of pixels 330 still remain on the right-side border of the image. The horizontal size of this remaining image part is smaller than the size of the SCU and therefore can not be coded.

Current syntax of a sequence parameter set in HEVC (JCTVC-E603 Section 7.3.2.1, available on http://phenix.int-evry.fr/ict/ ,meeting number 5 in Geneva from 16-03-2011 to 23-03-2011) includes a picture width and picture height in the number of luminance samples. Moreover, it includes the size of the smallest coding unit signaled as a base-2 logarithm of the SCU size minus three. For instance, an SCU size of 8x8 is signaled as 0, an SCU size of 16x16 is signaled as 1, an SCU size of 32x32 is signaled as 2, etc. In current design, the internal picture size in encoder and decoder must be a multiple of the smallest coding unit size. The current test software (HEVC test Model (HM) version3.0, available at http://hevc.kw.bbc.co.uk/svn/jctvc-hm) utilizes padding information that is explicitly signaled in number of pixels at the right and bottom boundaries of the image.

In order to provide an efficient approach for determining the internal and original size of the image at both encoder and decoder, according to the present invention, the size of the original image and the size of the smallest coding unit are indicated in the bit-stream and based on this information, the number of padding rows/columns is determined in the same way at the encoder and the decoder without the necessity of signalling any additional information, such as the number of padding rows and/or columns.

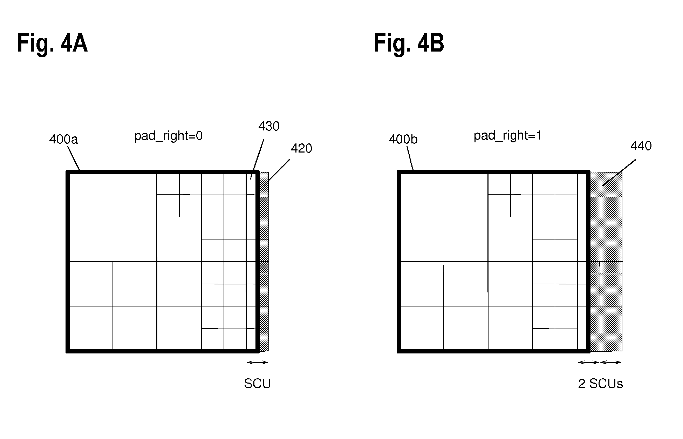

Figure 4A shows a picture 400a subdivided into coding units of different sizes similar to the picture 300 of Figure 3. As can be seen, at the right picture boundary there is a portion 430 of the original image, which is smaller than the smallest coding unit. In order to enable an appropriate internal representation necessary for encoding, padding pixels (columns of pixels) 420 are padded to the picture 400a. The number of padding pixel columns is calculated in such a way that the sum of the portion 430 and the number of padding pixel columns equal to the horizontal size of the SCU. Thus the number of padding pixel columns may be determined by subtracting from the size of the SCU the remainder after an integer division of the horizontal image size and the size of the SCU.

The number N of padding columns of pixels can therefore be calculated as:

$$N = s - (w \% s) \qquad \text{(equation 1)}$$

where s is the horizontal size of the smallest coding unit, w is the width of the picture and % is the modulo operation.

The present invention does not require any additional syntax elements in the bit-stream such as the number of padding pixels in vertical or horizontal direction. Thus, a redundancy of the current syntax is reduced. Moreover, the syntax becomes less error-prone for users since inconsistent configurations can be avoided (for instance setting the number of padding pixels which still does not result in integer multiple of the SCU).

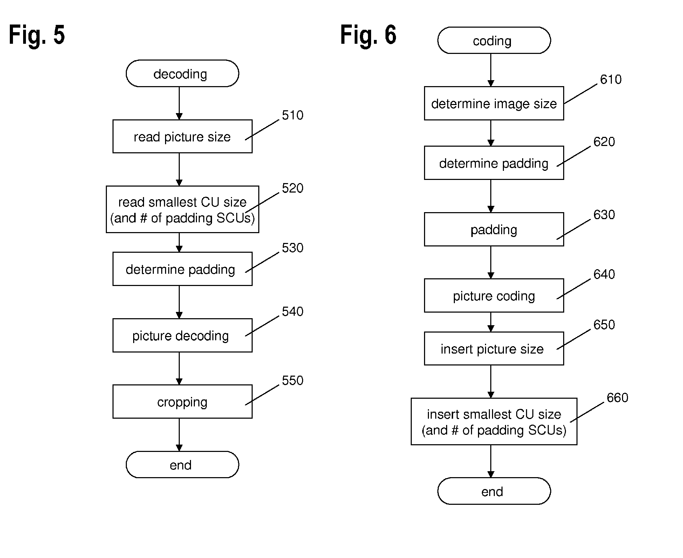

A method for encoding a digital image according to an embodiment of the present invention is shown in Figure 6. First, the size of the image input to the encoder is determined 610. This determination may be implemented in various ways according to the implementation of the encoder. For instance, the size of the input stream may be manually set by the user by means of a graphical user interface or a configuration file of the encoder. However, the size of the input picture (sequence of pictures) may also be extracted from the bit-stream of the original image/video to be coded. For instance, if an image or a video sequence is input in the form of a file with a header indicating the size of the picture(s), this size may be extracted from the header. However, the present invention is also applicable to any other determinations of the original image size at the encoder.

In general, the size of the smallest coding unit may be fixedly defined for the codec (or for a particular profile of the codec) or it may be configurable within the syntax of the coded bit-stream as described above with reference to HEVC. The configuration may be performed either by a user, for instance, by means of a graphical user interface or a configuration file, or may be set automatically by the encoder as a result of an optimization. The present invention is not limited by the manner in which the smallest coding unit size is set. The SCU may be square-formed as in the case of the HEVC. However, in general the SCU may also have different shapes. For example, it may be rectangular, for instance 16 x 8, 8 x 4, 8 x16 or similar. However, any other sizes or shapes are also applicable for the present invention.

When the size of the original image in the horizontal or vertical direction is not an integer multiple of the horizontal or vertical size of the smallest coding unit, respectively, the number of padding pixels is calculated 620. The term "number of padding pixels" refers to the number of the rows or columns of pixels to be padded to the horizontal (top, bottom) or vertical (left, right) side of the image. Preferably, the term "pixels" corresponds to the positions of the luminance samples also in the case when the chrominance is sub-sampled. In particular, the number of pixels to be padded vertically and/or horizontally to the original image in order to achieve a size which is an integer multiple of the SCU is determined. This may be performed, for instance by determining the number of rows and/or columns of pixels remaining after dividing the vertical and/or horizontal size of the image respectively by the vertical and/or horizontal size of the SCU. Then, the number of padding rows and/or columns may be determined as a difference between the size of the SCU and the determined remaining pixels.

Once the number of padding pixels has been determined, the padding is performed 630. As described above, padding may be performed by adding the calculated number of pixel rows and/or columns to one or more sides of the image. For instance, the rows may always (in a predefined way) be added to the bottom side of the image and the columns to the right side of the image. However, the rows may alternatively be added to the picture border on the top side of the picture and/or the columns may be added to the border of the picture on the left side. Both settings allow corresponding functioning of the encoder and the decoder without explicitly specifying to which side the padding rows/columns are added. Still alternatively, an approach of dividing the padding rows to the top and bottom side of the image may be defined. For instance, it may be predefined that an equal number of padding pixel rows is added to the top and bottom of the picture when the number of calculated padding pixels is even. When the number of calculated padding pixels is odd, it may be defined whether the top or the bottom border is padded with more pixel rows. Similarly, a subdivision of the calculated number of columns to the left and the right image borders may be defined so that no additional exchange of information is needed between the encoder and the decoder for signaling the position of the pixel columns to be padded.

The padding 630 may then be performed by repeating one or more lines (rows/columns) of the picture boundary to which the padding is performed. The padding pixels may also have a predefined value or may be determined as a function of the pixels in the proximity of the boundary. Such a function may be, for instance a weighted average of the pixels near to the boundary.

In order to ensure compatible handling of the image at the decoder side, the size of the input image and the size of the SCU are also embedded 650 and 660 into the bit-stream.

After the padding 630, the padded image having the size of integer multiple of the SCU, is provided as an input to picture encoding 640. The picture encoding may be realized, for instance by an encoder 100 as shown in Figure 1. However, it may also be encoded by another encoder, which encodes a picture on a per-coding-unit basis. The padded picture is encoded, resulting in a bit-stream (encoded signal).

It is noted that Figures 5 and 6 are only examples for illustrating the present invention and the particular implementation of the present invention may differ. For instance, the order of steps 650 and 660 may be different. Typically, the picture size is inserted into the bitstream before inserting the size of the SCU. However, in general, the order of embedding may also be vice versa. The steps 650 and 660 of embedding the syntax elements regarding the size of picture and the smallest coding unit also need not be performed after picture coding. In present codecs, they would be inserted into the bitstream before the picture coding step as these syntax elements are generally part of the SPS or PPS, which are coded before the actual picture coding.

The embedding here refers to ordering the syntax elements according to a predefined syntax into the bit-stream. The syntax elements may be represented by fix-length or variable-length coding. Especially in the case when some values are more probable than other values of the same syntax element, variable-length coding may be beneficial. The variable length coding may be any entropy coding such as integer coding (for instance Elias or Golomb codes), Huffman codes (fixed or context adaptive), or arithmetic codes (with a fixed or context adaptive probability model).

The corresponding decoding of the bit-stream including the digital image is illustrated in Figure 5. In particular, the input to the decoder is a bit-stream such as produced by the coding described with reference to Figure 6. The decoder parses and decodes the bit-stream. In particular, it reads 510 the picture size embedded in the bit-stream. The picture size is further provided to the image decoding. Then, the size of the smallest coding unit is also extracted 520 from the bitstream. After having read this information, the number of necessary padding pixels that have been added to the image at encoder side may be calculated 530 similarly as described with reference to step 620 of the encoding. In particular, when the signaled vertical or horizontal size of the image is not an integer multiple of the size of the signaled smallest coding unit, the number of padding pixels is determined so that the padded image is an integer multiple of the SCU size. This may be performed by determining the difference between the reminder after dividing the vertical and/or the horizontal size of the image by the smallest coding unit size (vertical and/or horizontal, respectively, in case the SCU is not square-shaped) and the size of the smallest coding unit (cf. equation 1 above). The picture is then decoded 540 and the rows/columns of pixels padded at the encoder are cropped 550 from the decoded picture. In particular, the number of rows and/or columns of padded pixels calculated during decoding based on the size of the picture and the size of the SCU 530 is cut-off and the output of the decoder is the cropped picture with a size corresponding to the picture size of the original image before encoding.

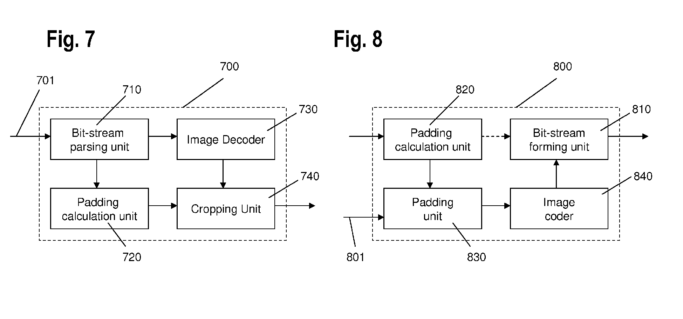

Figure 8 illustrates an example encoding apparatus 800 for implementing the present invention. The encoding apparatus 800 includes a padding calculation unit 820, a padding unit 830, an image coder 840 and a bit-stream forming unit 810. The original image 801 to be encoded may have any size. The original image 801 is input to the encoding apparatus 800, in particular to the padding unit 830. The size of the input original image 801 is input to the padding calculation unit 820. The size may be determined based on the header file of the original image 801, or via a user input to the encoder, or in any other way. The size of the smallest coding unit may also be set by the user or predefined for the given encoder or determined based on the profile or other coding settings of the encoder. The padding calculation unit 820 then calculates the number of padding rows and columns to be added to the original image 801 so that the size of the padded image is an integer multiple of the size of the smallest coding unit. The calculated number of padding rows/columns is further provided to the padding unit 830. The padding unit 830 adds the calculated number of rows and/or columns of pixels with padding data to the image, resulting in the padded image which is then input to the image encoder 840. The bit-stream forming unit 810 embeds the size of the original input image 801 into the bit-stream, together with the size of the smallest coding unit. This is preferably performed at the beginning of the actual image coding. For instance, the size of the image before padding and the size of the SCU are embedded within a sequence-specific parameter set, such as SPS in HEVC.

The image coder 840 codes the padded image. The coder 840 may be a coder 100 described with reference to Figure 1, or any other image or video coder. In general, the padded image is subdivided into the coding units, which may have different sizes, and the coding units are encoded, for instance in the way describes in the background section above. The coded bit-stream portion corresponding to the coded picture is then provided to the bit-stream forming unit 810 and embedded in the bit-stream of the encoded image/video. The entire coded stream may then be stored or transmitted.

Correspondingly, Figure 7 illustrates an example decoder 700 for decoding of the bit-stream. In particular, the example decoder 700 includes a bit-stream parsing unit 710, a padding calculation unit 720, an image decoder 730 and a cropping unit 740. The bit-stream 701 is received from a communication channel or retrieved from storage. In particular, the bit-stream parsing unit 710 extracts from the bit-stream the information elements including the size of the image before padding (size of the original image) and/or the size of the smallest coding unit. It further extracts from the bitstream the encoded image data. The encoded image data are provided to the image decoder 730. The image decoder 730 decodes the encoded image data, coding unit per coding unit, resulting in a decoded picture, which corresponds to the padded picture at the encoder side, but may have a reduced quality due to a lossy compression (for example quantization). The decoder 730 may be, for instance a decoder 200 described with reference to Figure 2. In order to obtain the picture in the original size before padding, the decoder comprises a padding calculation unit 720 and cropping unit 740. The size of the image before padding and the size of the smallest coding unit extracted from the bit-stream by the bit-stream parsing unit 710 are input to the padding calculation unit 720. Based on this information, the padding calculation unit 720 calculates the number of padding pixels that have been added to the image at encoder side similarly as described with reference to the padding calculation unit 820 at encoder side. In particular, the number of padding rows and/or columns of pixels may be determined as a difference between the image size before padding and a multiple of the smallest coding unit closest to, but larger than the respective vertical and/or horizontal size of the image (cf. equation 1). The determined number of padding pixels and the decoded padded image are then provided to the cropping unit 740. Accordingly, the cropping unit 740 cuts off the calculated number of padding pixels from the picture, and obtains thus the picture in its original size without padding. The cropped picture may then be rendered on a display or stored or further processed.

The present invention is not concerned with a particular approach of padding, i.e. how the padding data is to be determined. The present invention may work with any padding data. Typically, the padding is performed by repetition of the pixels at the border of the picture. The repetition may be performed by repeating the same line (row or column) or by repeating N lines closest to the border. However, other approaches may be employed as well and more sophisticated determination of padding data based on encoder optimization may be performed.

In the example described above, it has been assumed that the number of padding pixels is always less than the size of the SCU. In other words, the considered number of padding pixels has always been the minimum number necessary to code the pictures. Based on this assumption, the encoder and the decoder may unambiguously determine the number of padding pixels. Such an assumption has also consequences on the subdivision of the picture into coding units of different sizes in HEVC. Let us assume an example of an image with vertical size 128 and horizontal size 141 luma samples, which may to be coded with an SCU of 8x8 and LCU of 64x64. When the picture is only divided into coding units of LCU size, the horizontal size of the picture will be two times the size of the LCU (resulting in 128 luma samples) plus remaining 13 samples. However, 13 is indeed still larger than the SCU size and therefore, the picture must be further segmented to coding units of smaller size, for instance, one coding unit of size 16x16, or two coding units of size 8x8. After such subdivision, only three columns of pixels remain to be padded. In other words, unambiguous determining of the number of padding pixels at the encoder and the decoder assumes certain minimum granularity to which the picture is to be segmented depending on the input picture size. In the described example, CUs of size 16x16 or smaller are necessary on the right border of the image, It is not possible to have a CU of size 32x32 on the right border, because there are not enough pixels, even in the padded image.

However, from the point of view of coding efficiency, larger coding units may sometimes be more advantageous. However, at the picture boundaries, a coding unit is automatically further split if its size is bigger than the number of remaining pixels. This results for some image sizes in many small coding units at boundaries, which may lead to a decrease of the coding efficiency, since more prediction information may be generated and transmitted.

Therefore, in accordance with an embodiment of the present invention, the padding is performed in a more flexible way. In particular, an adaptivity of the number of padding pixels is introduced in order to give an encoder the possibility to find the best trade-off between the number of padding pixels and the size of coding units at the picture boundaries. This is performed by introducing one or more additional syntax elements to enable the possibility of increasing the number of padding pixels compared to the necessary minimum.

Advantageously, a number of smallest coding units to be padded is signaled. The number of padding SCUs indicates the number of additional padding SCUs on the border(s) of the frame.

Figure 4B illustrates an example, in which the number of padding SCUs at the right border of the image is equal to one ("pad_right=1"). In this case, the SCUs are padded to the right picture border. It is noted, that the above described example of Figure 4A shows the number of padding SCUs being equal to 0 ("pad_right=0"). As can be seen from Figure 4B, the number of padded pixels is at least one time the size of the SCU. As can be seen in the figure, the boundary coding units in this case may be larger than the SCU, which may result to a better coding efficiency.

The number N of padding columns of pixels is therefore calculated as:

$$N = s - (w\%s) + pad\_right * s \qquad \text{(equation 2)}$$

where s is the horizontal size of the smallest coding unit, w is the width of the picture, pad_right is the syntax element indicating the number of additional padding SCUs at the right boundary and % is the modulo operation. It is noted that pad_right may be replaced or supplemented by pad_left in the case when padding on the left hand side of the image is performed. Similarly the vertical padding may be calculated involving syntax elements pad_top and/or pad_bottom.

In order to support this flexibility, the steps 650 and 520 of the encoding and decoding method described with reference to Figures 6 and 5, respectively, may be modified to include: 1) at the encoder, embedding an indicator of the number of padding SCUs into the bit-stream and 2) at the decoder, extracting the embedded number of padding SCUs from the bitstream. The number of padding SCUs is to be used at the encoder and the decoder in the same way - to unambiguously derive the number of padding pixels. This calculation may be performed by calculating the number of padding pixels as a sum of the number of padding SCUs times the size of the SCU plus the minimum number of necessary padding pixels calculated as described in the first embodiment of the present invention (cf. equation 2 above). Similarly, the functionality of the encoder and the decoder described with reference to Figures 8 and 7, respectively may be amended to support this kind of flexibility. In particular, the padding calculation unit 820 of the encoder 800 of Figure 8 may also calculate the number of pixels to be padded larger than the SCU. The number of pixels padded may be calculated, for instance, as a result of optimization - finding a trade-off between number of padding pixels and size of CUs at image boundaries. In order to enable the decoder to calculate the same number of padding pixels, the number of padding SCUs at the image borders is provided to the bit-stream forming unit 810, which embeds it to the bit-stream. At the decoder 700 of Figure 7, the bit-stream parsing unit 710 extracts the number of padding SCUs from the bitstream and provides it to the padding calculation unit 720, which, in the same way as the encoder 800, calculates the number of the padding pixels.

In order to achieve even more flexibility, in accordance with another embodiment of the present invention, the number of padding SCUs may be separately indicated for any or each of the four picture boundaries: the top, bottom, left, and right. Several flags may thus be transmitted: pad_right for additional padding on the right, pad_below for additional padding below, pad_up for additional padding up, pad_left for additional padding left. In this way, it is possible to select padding in such a way that the resulting image distortion is optimized.

For the embodiment with implicit determination of the number of padding pixels smaller than the SCU size, it may be also explicitly signaled, to which image borders (top, bottom, left, right), the padding pixels are to be divided. It may then be predefined, how the padding pixels are subdivided to the bottom and top, or to the left and right borders.

It may be beneficial to adapt padding and/or SCU size during the video sequence, for instance, depending on the content of the images. Thus, instead of signalling the padding indicators together with the sequence parameter set, the padding indicators may be signaled within the picture parameter set, i.e. together with information related to pictures. For instance, in terms of HEVC, the indicators may be transmitted in the PPS rather than in the SPS. For instance, even the SCU size may be transmitted within the PPS. Independently of signalling frequency of the image size or the SCU size, the number of passing SCUs and/or the indications per padding borders may be transmitted within PPS or SPS.

Hereinafter, the applications to the video coding method and the video decoding method described in each of embodiments and systems using thereof will be described.

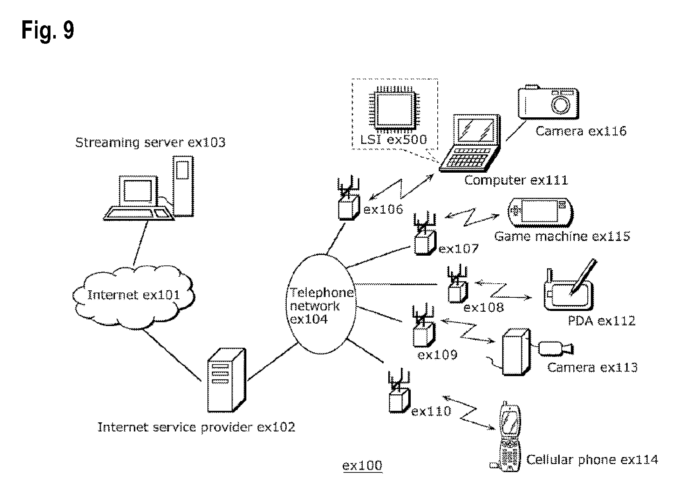

Figure 9 illustrates an overall configuration of a content providing system ex100 for implementing content distribution services. The area for providing communication services is divided into cells of desired size, and base stations ex106, ex107, ex108, ex109, and ex110 which are fixed wireless stations are placed in each of the cells.

The content providing system ex100 is connected to devices, such as a computer ex111, a personal digital assistant (PDA) ex112, a camera ex113, a cellular phone ex114 and a game machine ex115, via the Internet ex101, an Internet service provider ex102, a telephone network ex104, as well as the base stations ex106 to ex110, respectively.

However, the configuration of the content providing system ex100 is not limited to the configuration shown in Figure 9, and a combination in which any of the elements are connected is acceptable. In addition, each device may be directly connected to the telephone network ex104, rather than via the base stations ex106 to ex110 which are the fixed wireless stations. Furthermore, the devices may be interconnected to each other via a short distance wireless communication and others.

The camera ex113, such as a digital video camera, is capable of capturing video. A camera ex116, such as a digital video camera, is capable of capturing both still images and video. Furthermore, the cellular phone ex114 may be the one that meets any of the standards such as Global System for Mobile Communications (GSM), Code Division Multiple Access (CDMA), Wideband-Code Division Multiple Access (W-CDMA), Long Term Evolution (LTE), and High Speed Packet Access (HSPA). Alternatively, the cellular phone ex114 may be a Personal Handyphone System (PHS).

In the content providing system ex100, a streaming server ex103 is connected to the camera ex113 and others via the telephone network ex104 and the base station ex109, which enables distribution of images of a live show and others. In such a distribution, a content (for example, video of a music live show) captured by the user using the camera ex113 is coded as described above in each of embodiments, and the coded content is transmitted to the streaming server ex103. On the other hand, the streaming server ex103 carries out stream distribution of the transmitted content data to the clients upon their requests. The clients include the computer ex111, the PDA ex112, the camera ex113, the cellular phone ex114, and the game machine ex115 that are capable of decoding the above-mentioned coded data. Each of the devices that have received the distributed data decodes and reproduces the coded data.

The captured data may be coded by the camera ex113 or the streaming server ex103 that transmits the data, or the coding processes may be shared between the camera ex113 and the streaming server ex103. Similarly, the distributed data may be decoded by the clients or the streaming server ex103, or the decoding processes may be shared between the clients and the streaming server ex103. Furthermore, the data of the still images and video captured by not only the camera ex113 but also the camera ex116 may be transmitted to the streaming server ex103 through the computer ex111. The coding processes may be performed by the camera ex116, the computer ex111, or the streaming server ex103, or shared among them.

Furthermore, the coding and decoding processes may be performed by an LSI ex500 generally included in each of the computer ex111 and the devices. The LSI ex500 may be configured of a single chip or a plurality of chips. Software for coding and decoding video may be integrated into some type of a recording medium (such as a CD-ROM, a flexible disk, and a hard disk) that is readable by the computer ex111 and others, and the coding and decoding processes may be performed using the software. Furthermore, when the cellular phone ex114 is equipped with a camera, the image data obtained by the camera may be transmitted. The video data is data coded by the LSI ex500 included in the cellular phone ex114.

Furthermore, the streaming server ex103 may be composed of servers and computers, and may decentralize data and process the decentralized data, record, or distribute data.

As described above, the clients may receive and reproduce the coded data in the content providing system ex100. In other words, the clients can receive and decode information transmitted by the user, and reproduce the decoded data in real time in the content providing system ex100, so that the user who does not have any particular right and equipment can implement personal broadcasting.

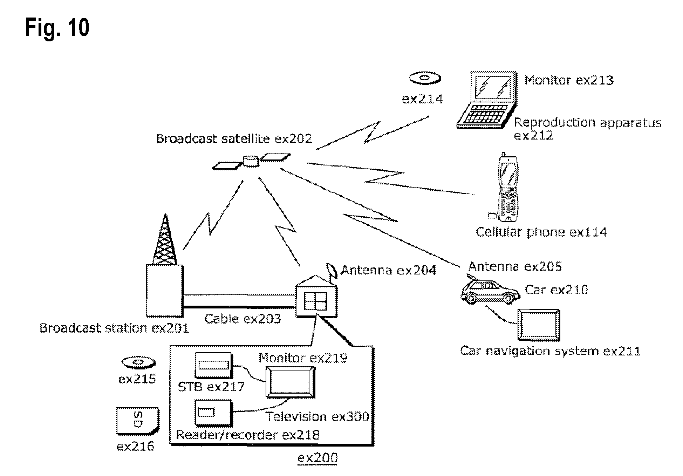

Aside from the example of the content providing system ex100, at least one of the video coding apparatus and the video decoding apparatus described in each of embodiments may be implemented in a digital broadcasting system ex200 illustrated in Figure 10. More specifically, a broadcast station ex201 communicates or transmits, via radio waves to a broadcast satellite ex202, multiplexed data obtained by multiplexing audio data and others onto video data. The video data is data coded by the video coding method described in each of embodiments. Upon receipt of the multiplexed data, the broadcast satellite ex202 transmits radio waves for broadcasting. Then, a home-use antenna ex204 with a satellite broadcast reception function receives the radio waves.

Next, a device such as a television (receiver) ex300 and a set top box (STB) ex217 decodes the received multiplexed data, and reproduces the decoded data.

Furthermore, a reader/recorder ex218 (i) reads and decodes the multiplexed data recorded on a recording media ex215, such as a DVD and a BD, or (i) codes video signals in the recording medium ex215, and in some cases, writes data obtained by multiplexing an audio signal on the coded data. The reader/recorder ex218 can include the video decoding apparatus or the video coding apparatus as shown in each of embodiments. In this case, the reproduced video signals are displayed on the monitor ex219, and can be reproduced by another device or system using the recording medium ex215 on which the multiplexed data is recorded. It is also possible to implement the video decoding apparatus in the set top box ex217 connected to the cable ex203 for a cable television or to the antenna ex204 for satellite and/or terrestrial broadcasting, so as to display the video signals on the monitor ex219 of the television ex300. The video decoding apparatus may be implemented not in the set top box but in the television ex300.

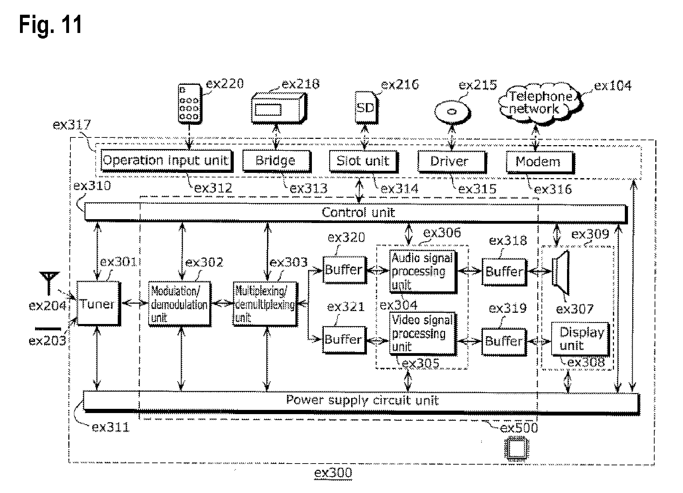

Figure 11 illustrates the television (receiver) ex300 that uses the video coding method and the video decoding method described in each of embodiments. The television ex300 includes: a tuner ex301 that obtains or provides multiplexed data obtained by multiplexing audio data onto video data, through the antenna ex204 or the cable ex203, etc. that receives a broadcast; a modulation/demodulation unit ex302 that demodulates the received multiplexed data or modulates data into multiplexed data to be supplied outside; and a multiplexing/demultiplexing unit ex303 that demultiplexes the modulated multiplexed data into video data and audio data, or multiplexes video data and audio data coded by a signal processing unit ex306 into data.

The television ex300 further includes: a signal processing unit ex306 including an audio signal processing unit ex304 and a video signal processing unit ex305 that decode audio data and video data and code audio data and video data, respectively; and an output unit ex309 including a speaker ex307 that provides the decoded audio signal, and a display unit ex308 that displays the decoded video signal, such as a display. Furthermore, the television ex300 includes an interface unit ex317 including an operation input unit ex312 that receives an input of a user operation. Furthermore, the television ex300 includes a control unit ex310 that controls overall each constituent element of the television ex300, and a power supply circuit unit ex311 that supplies power to each of the elements. Other than the operation input unit ex312, the interface unit ex317 may include: a bridge ex313 that is connected to an external device, such as the reader/recorder ex218; a slot unit ex314 for enabling attachment of the recording medium ex216, such as an SD card; a driver ex315 to be connected to an external recording medium, such as a hard disk; and a modem ex316 to be connected to a telephone network. Here, the recording medium ex216 can electrically record information using a non-volatile/volatile semiconductor memory element for storage. The constituent elements of the television ex300 are connected to each other through a synchronous bus.

First, the configuration in which the television ex300 decodes multiplexed data obtained from outside through the antenna ex204 and others and reproduces the decoded data will be described. In the television ex300, upon a user operation through a remote controller ex220 and others, the multiplexing/demultiplexing unit ex303 demultiplexes the multiplexed data demodulated by the modulation/demodulation unit ex302, under control of the control unit ex310 including a CPU. Furthermore, the audio signal processing unit ex304 decodes the demultiplexed audio data, and the video signal processing unit ex305 decodes the demultiplexed video data, using the decoding method described in each of embodiments, in the television ex300. The output unit ex309 provides the decoded video signal and audio signal outside, respectively. When the output unit ex309 provides the video signal and the audio signal, the signals may be temporarily stored in buffers ex318 and ex319, and others so that the signals are reproduced in synchronization with each other. Furthermore, the television ex300 may read multiplexed data not through a broadcast and others but from the recording media ex215 and ex216, such as a magnetic disk, an optical disk, and a SD card. Next, a configuration in which the television ex300 codes an audio signal and a video signal, and transmits the data outside or writes the data on a recording medium will be described. In the television ex300, upon a user operation through the remote controller ex220 and others, the audio signal processing unit ex304 codes an audio signal, and the video signal processing unit ex305 codes a video signal, under control of the control unit ex310 using the coding method described in each of embodiments. The multiplexing/demultiplexing unit ex303 multiplexes the coded video signal and audio signal, and provides the resulting signal outside. When the multiplexing/demultiplexing unit ex303 multiplexes the video signal and the audio signal, the signals may be temporarily stored in the buffers ex320 and ex321, and others so that the signals are reproduced in synchronization with each other. Here, the buffers ex318, ex319, ex320, and ex321 may be plural as illustrated, or at least one buffer may be shared in the television ex300. Furthermore, data may be stored in a buffer so that the system overflow and underflow may be avoided between the modulation/demodulation unit ex302 and the multiplexing/demultiplexing unit ex303, for example.

Furthermore, the television ex300 may include a configuration for receiving an AV input from a microphone or a camera other than the configuration for obtaining audio and video data from a broadcast or a recording medium, and may code the obtained data. Although the television ex300 can code, multiplex, and provide outside data in the description, it may be capable of only receiving, decoding, and providing outside data but not the coding, multiplexing, and providing outside data.

Furthermore, when the reader/recorder ex218 reads or writes multiplexed data from or on a recording medium, one of the television ex300 and the reader/recorder ex218 may decode or code the multiplexed data, and the television ex300 and the reader/recorder ex218 may share the decoding or coding.

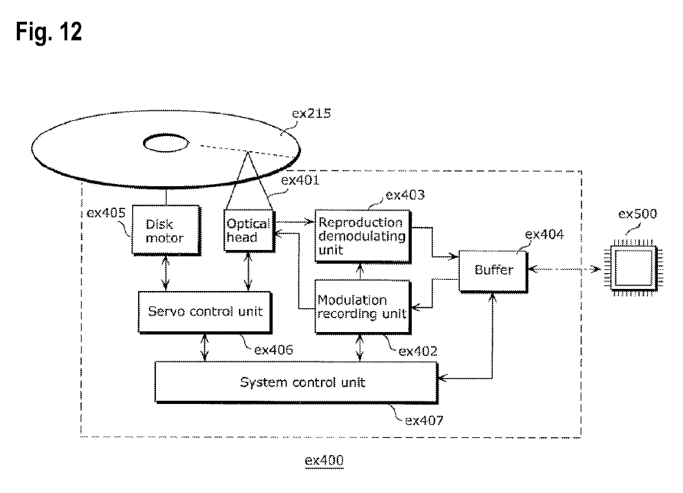

As an example, Figure 12 illustrates a configuration of an information reproducing/recording unit ex400 when data is read or written from or on an optical disk. The information reproducing/recording unit ex400 includes constituent elements ex401, ex402, ex403, ex404, ex405, ex406, and ex407 to be described hereinafter. The optical head ex401 irradiates a laser spot in a recording surface of the recording medium ex215 that is an optical disk to write information, and detects reflected light from the recording surface of the recording medium ex215 to read the information. The modulation recording unit ex402 electrically drives a semiconductor laser included in the optical head ex401, and modulates the laser light according to recorded data. The reproduction demodulating unit ex403 amplifies a reproduction signal obtained by electrically detecting the reflected light from the recording surface using a photo detector included in the optical head ex401, and demodulates the reproduction signal by separating a signal component recorded on the recording medium ex215 to reproduce the necessary information. The buffer ex404 temporarily holds the information to be recorded on the recording medium ex215 and the information reproduced from the recording medium ex215 The disk motor ex405 rotates the recording medium ex215. The servo control unit ex406 moves the optical head ex401 to a predetermined information track while controlling the rotation drive of the disk motor ex405 so as to follow the laser spot. The system control unit ex407 controls overall the information reproducing/recording unit ex400. The reading and writing processes can be implemented by the system control unit ex407 using various information stored in the buffer ex404 and generating and adding new information as necessary, and by the modulation recording unit ex402, the reproduction demodulating unit ex403, and the servo control unit ex406 that record and reproduce information through the optical head ex401 while being operated in a coordinated manner. The system control unit ex407 includes, for example, a microprocessor, and executes processing by causing a computer to execute a program for read and write.

Although the optical head ex401 irradiates a laser spot in the description, it may perform high-density recording using near field light.

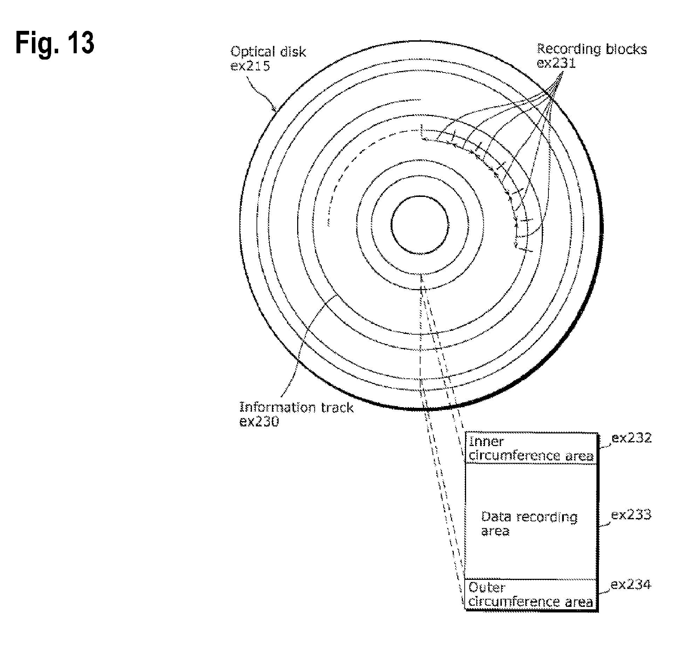

Figure 13 illustrates the recording medium ex215 that is the optical disk. On the recording surface of the recording medium ex215, guide grooves are spirally formed, and an information track ex230 records, in advance, address information indicating an absolute position on the disk according to change in a shape of the guide grooves. The address information includes information for determining positions of recording blocks ex231 that are a unit for recording data. Reproducing the information track ex230 and reading the address information in an apparatus that records and reproduces data can lead to determination of the positions of the recording blocks. Furthermore, the recording medium ex215 includes a data recording area ex233, an inner circumference area ex232, and an outer circumference area ex234. The data recording area ex233 is an area for use in recording the user data. The inner circumference area ex232 and the outer circumference area ex234 that are inside and outside of the data recording area ex233, respectively are for specific use except for recording the user data. The information reproducing/recording unit 400 reads and writes coded audio, coded video data, or multiplexed data obtained by multiplexing the coded audio and video data, from and on the data recording area ex233 of the recording medium ex215.

Although an optical disk having a layer, such as a DVD and a BD is described as an example in the description, the optical disk is not limited to such, and may be an optical disk having a multilayer structure and capable of being recorded on a part other than the surface. Furthermore, the optical disk may have a structure for multidimensional recording/reproduction, such as recording of information using light of colors with different wavelengths in the same portion of the optical disk and for recording information having different layers from various angles.

Furthermore, a car ex210 having an antenna ex205 can receive data from the satellite ex202 and others, and reproduce video on a display device such as a car navigation system ex211 set in the car ex210, in the digital broadcasting system ex200. Here, a configuration of the car navigation system ex211 will be a configuration, for example, including a GPS receiving unit from the configuration illustrated in Figure 11. The same will be true for the configuration of the computer ex111, the cellular phone ex114, and others.

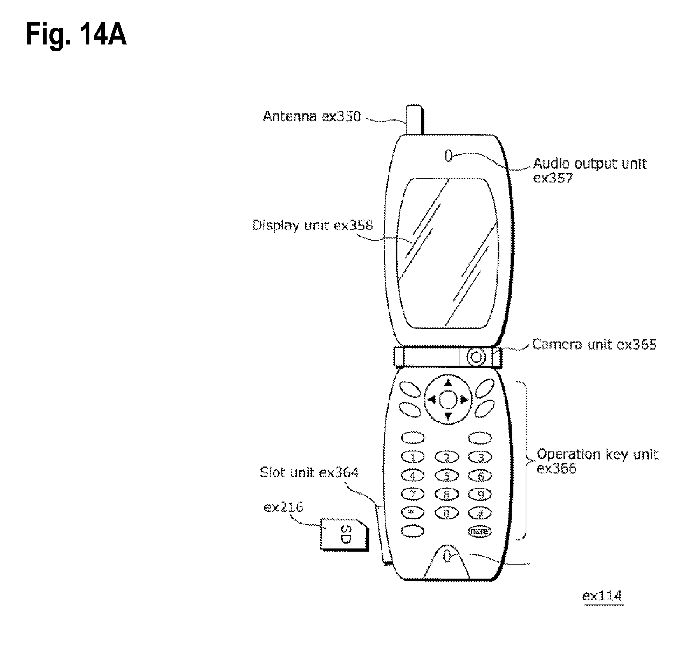

Figure 14A illustrates the cellular phone ex114 that uses the video coding method and the video decoding method described in embodiments. The cellular phone ex114 includes: an antenna ex350 for transmitting and receiving radio waves through the base station ex110; a camera unit ex365 capable of capturing moving and still images; and a display unit ex358 such as a liquid crystal display for displaying the data such as decoded video captured by the camera unit ex365 or received by the antenna ex350. The cellular phone ex114 further includes: a main body unit including an operation key unit ex366; an audio output unit ex357 such as a speaker for output of audio; an audio input unit ex356 such as a microphone for input of audio; a memory unit ex367 for storing captured video or still pictures, recorded audio, coded or decoded data of the received video, the still pictures, e-mails, or others; and a slot unit ex364 that is an interface unit for a recording medium that stores data in the same manner as the memory unit ex367.

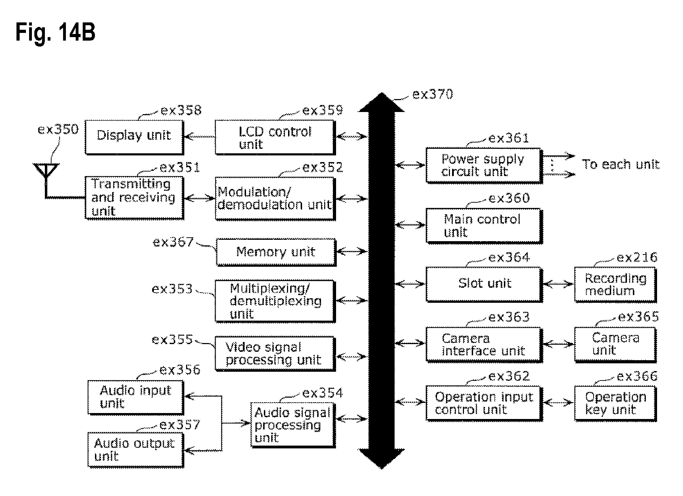

Next, an example of a configuration of the cellular phone ex114 will be described with reference to Figure14B. In the cellular phone ex114, a main control unit ex360 designed to control overall each unit of the main body including the display unit ex358 as well as the operation key unit ex366 is connected mutually, via a synchronous bus ex370, to a power supply circuit unit ex361, an operation input control unit ex362, a video signal processing unit ex355, a camera interface unit ex363, a liquid crystal display (LCD) control unit ex359, a modulation/demodulation unit ex352, a multiplexing/demultiplexing unit ex353, an audio signal processing unit ex354, the slot unit ex364, and the memory unit ex367.

When a call-end key or a power key is turned ON by a user's operation, the power supply circuit unit ex361 supplies the respective units with power from a battery pack so as to activate the cell phone ex114.

In the cellular phone ex114, the audio signal processing unit ex354 converts the audio signals collected by the audio input unit ex356 in voice conversation mode into digital audio signals under the control of the main control unit ex360 including a CPU, ROM, and RAM. Then, the modulation/demodulation unit ex352 performs spread spectrum processing on the digital audio signals, and the transmitting and receiving unit ex351 performs digital-to-analog conversion and frequency conversion on the data, so as to transmit the resulting data via the antenna ex350.

Also, in the cellular phone ex114, the transmitting and receiving unit ex351 amplifies the data received by the antenna ex350 in voice conversation mode and performs frequency conversion and the analog-to-digital conversion on the data. Then, the modulation/demodulation unit ex352 performs inverse spread spectrum processing on the data, and the audio signal processing unit ex354 converts it into analog audio signals, so as to output them via the audio output unit ex356.

Furthermore, when an e-mail in data communication mode is transmitted, text data of the e-mail inputted by operating the operation key unit ex366 and others of the main body is sent out to the main control unit ex360 via the operation input control unit ex362. The main control unit ex360 causes the modulation/demodulation unit ex352 to perform spread spectrum processing on the text data, and the transmitting and receiving unit ex351 performs the digital-to-analog conversion and the frequency conversion on the resulting data to transmit the data to the base station ex110 via the antenna ex350. When an e-mail is received, processing that is approximately inverse to the processing for transmitting an e-mail is performed on the received data, and the resulting data is provided to the display unit ex358.

When video, still images, or video and audio in data communication mode is or are transmitted, the video signal processing unit ex355 compresses and codes video signals supplied from the camera unit ex365 using the video coding method shown in each of embodiments, and transmits the coded video data to the multiplexing/demultiplexing unit ex353. In contrast, during when the camera unit ex365 captures video, still images, and others, the audio signal processing unit ex354 codes audio signals collected by the audio input unit ex356, and transmits the coded audio data to the multiplexing/demultiplexing unit ex353.

The multiplexing/demultiplexing unit ex353 multiplexes the coded video data supplied from the video signal processing unit ex355 and the coded audio data supplied from the audio signal processing unit ex354, using a predetermined method.

Then, the modulation/demodulation unit ex352 performs spread spectrum processing on the multiplexed data, and the transmitting and receiving unit ex351 performs digital-to-analog conversion and frequency conversion on the data so as to transmit the resulting data via the antenna ex350.

When receiving data of a video file which is linked to a Web page and others in data communication mode or when receiving an e-mail with video and/or audio attached, in order to decode the multiplexed data received via the antenna ex350, the multiplexing/demultiplexing unit ex353 demultiplexes the multiplexed data into a video data bit stream and an audio data bit stream, and supplies the video signal processing unit ex355 with the coded video data and the audio signal processing unit ex354 with the coded audio data, through the synchronous bus ex370. The video signal processing unit ex355 decodes the video signal using a video decoding method corresponding to the coding method shown in each of embodiments, and then the display unit ex358 displays, for instance, the video and still images included in the video file linked to the Web page via the LCD control unit ex359. Furthermore, the audio signal processing unit ex354 decodes the audio signal, and the audio output unit ex357 provides the audio.

Furthermore, similarly to the television ex300, a terminal such as the cellular phone ex114 probably have 3 types of implementation configurations including not only (i) a transmitting and receiving terminal including both a coding apparatus and a decoding apparatus, but also (ii) a transmitting terminal including only a coding apparatus and (iii) a receiving terminal including only a decoding apparatus. Although the digital broadcasting system ex200 receives and transmits the multiplexed data obtained by multiplexing audio data onto video data in the description, the multiplexed data may be data obtained by multiplexing not audio data but character data related to video onto video data, and may be not multiplexed data but video data itself.

As such, the video coding method and the video decoding method in each of embodiments can be used in any of the devices and systems described. Thus, the advantages described in each of embodiments can be obtained.

Furthermore, the present invention is not limited to embodiments, and various modifications and revisions are possible without departing from the scope of the present invention.

Video data can be generated by switching, as necessary, between (i) the video coding method or the video coding apparatus shown in each of embodiments and (ii) a video coding method or a video coding apparatus in conformity with a different standard, such as MPEG-2, H.264/AVC, and VC-1.

Here, when a plurality of video data that conforms to the different standards is generated and is then decoded, the decoding methods need to be selected to conform to the different standards. However, since to which standard each of the plurality of the video data to be decoded conform cannot be detected, there is a problem that an appropriate decoding method cannot be selected.

In order to solve the problem, multiplexed data obtained by multiplexing audio data and others onto video data has a structure including identification information indicating to which standard the video data conforms. The specific structure of the multiplexed data including the video data generated in the video coding method and by the video coding apparatus shown in each of embodiments will be hereinafter described. The multiplexed data is a digital stream in the MPEG2-Transport Stream format.

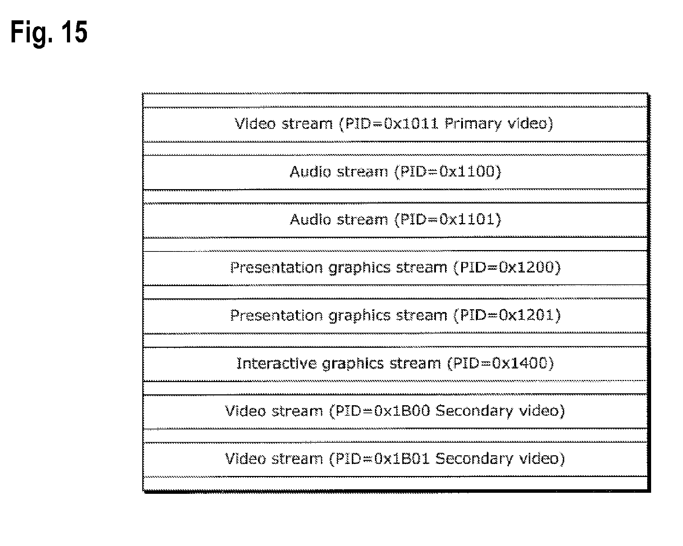

Figure 15 illustrates a structure of the multiplexed data. As illustrated in Figure 15, the multiplexed data can be obtained by multiplexing at least one of a video stream, an audio stream, a presentation graphics stream (PG), and an interactive graphics stream. The video stream represents primary video and secondary video of a movie, the audio stream (IG) represents a primary audio part and a secondary audio part to be mixed with the primary audio part, and the presentation graphics stream represents subtitles of the movie. Here, the primary video is normal video to be displayed on a screen, and the secondary video is video to be displayed on a smaller window in the primary video. Furthermore, the interactive graphics stream represents an interactive screen to be generated by arranging the GUI components on a screen. The video stream is coded in the video coding method or by the video coding apparatus shown in each of embodiments, or in a video coding method or by a video coding apparatus in conformity with a conventional standard, such as MPEG-2, H.264/AVC, and VC-1. The audio stream is coded in accordance with a standard, such as Dolby-AC-3, Dolby Digital Plus, MLP, DTS, DTS-HD, and linear PCM.

Each stream included in the multiplexed data is identified by PID. For example, 0x1011 is allocated to the video stream to be used for video of a movie, 0x1100 to 0x111F are allocated to the audio streams, 0x1200 to 0x121F are allocated to the presentation graphics streams, 0x1400 to 0x141 F are allocated to the interactive graphics streams, 0x1 B00 to 0x1B1F are allocated to the video streams to be used for secondary video of the movie, and 0x1A00 to 0x1A1F are allocated to the audio streams to be used for the secondary video to be mixed with the primary audio.

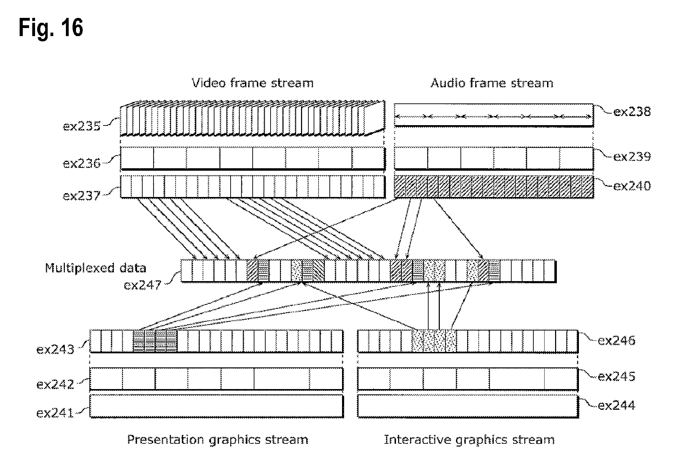

Figure 16 schematically illustrates how data is multiplexed. First, a video stream ex235 composed of video frames and an audio stream ex238 composed of audio frames are transformed into a stream of PES packets ex236 and a stream of PES packets ex239, and further into TS packets ex237 and TS packets ex240, respectively. Similarly, data of a presentation graphics stream ex241 and data of an interactive graphics stream ex244 are transformed into a stream of PES packets ex242 and a stream of PES packets ex245, and further into TS packets ex243 and TS packets ex246, respectively. These TS packets are multiplexed into a stream to obtain multiplexed data ex247.

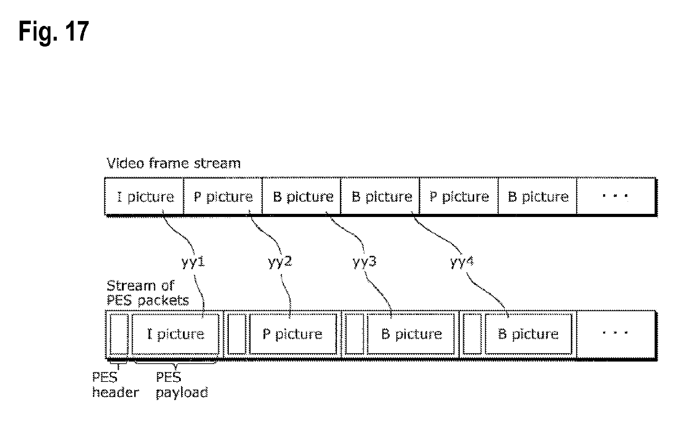

Figure 17 illustrates how a video stream is stored in a stream of PES packets in more detail. The first bar in Figure 17 shows a video frame stream in a video stream. The second bar shows the stream of PES packets. As indicated by arrows denoted as yy1, yy2, yy3, and yy4 in Figure 17, the video stream is divided into pictures as I pictures, B pictures, and P pictures each of which is a video presentation unit, and the pictures are stored in a payload of each of the PES packets. Each of the PES packets has a PES header, and the PES header stores a Presentation Time-Stamp (PTS) indicating a display time of the picture, and a Decoding Time-Stamp (DTS) indicating a decoding time of the picture.

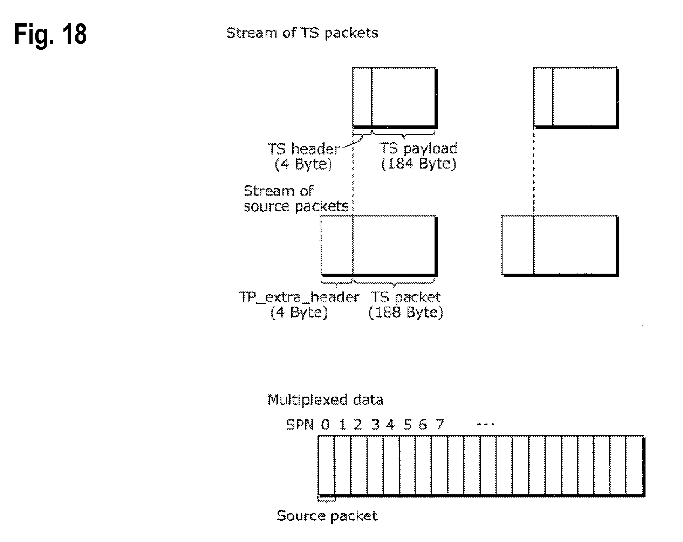

Figure 18 illustrates a format of TS packets to be finally written on the multiplexed data. Each of the TS packets is a 188-byte fixed length packet including a 4-byte TS header having information, such as a PID for identifying a stream and a 184-byte TS payload for storing data. The PES packets are divided, and stored in the TS payloads, respectively. When a BD ROM is used, each of the TS packets is given a 4-byte TP_Extra_Header, thus resulting in 192-byte source packets. The source packets are written on the multiplexed data. The TP_Extra_Header stores information such as an Arrival_Time_Stamp (ATS). The ATS shows a transfer start time at which each of the TS packets is to be transferred to a PID filter. The source packets are arranged in the multiplexed data as shown at the bottom of Figure 18. The numbers incrementing from the head of the multiplexed data are called source packet numbers (SPNs).

Each of the TS packets included in the multiplexed data includes not only streams of audio, video, subtitles and others, but also a Program Association Table (PAT), a Program Map Table (PMT), and a Program Clock Reference (PCR). The PAT shows what a PID in a PMT used in the multiplexed data indicates, and a PID of the PAT itself is registered as zero. The PMT stores PIDs of the streams of video, audio, subtitles and others included in the multiplexed data, and attribute information of the streams corresponding to the PIDs. The PMT also has various descriptors relating to the multiplexed data. The descriptors have information such as copy control information showing whether copying of the multiplexed data is permitted or not. The PCR stores STC time information corresponding to an ATS showing when the PCR packet is transferred to a decoder, in order to achieve synchronization between an Arrival Time Clock (ATC) that is a time axis of ATSs, and an System Time Clock (STC) that is a time axis of PTSs and DTSs.

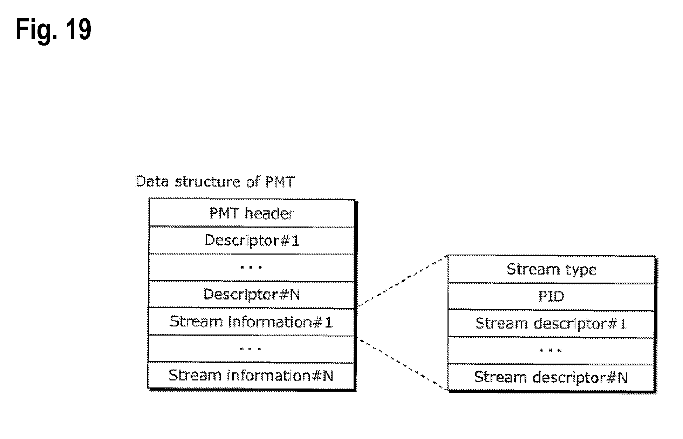

Figure 19 illustrates the data structure of the PMT in detail. A PMT header is disposed at the top of the PMT. The PMT header describes the length of data included in the PMT and others. A plurality of descriptors relating to the multiplexed data is disposed after the PMT header. Information such as the copy control information is described in the descriptors. After the descriptors, a plurality of pieces of stream information relating to the streams included in the multiplexed data is disposed. Each piece of stream information includes stream descriptors each describing information, such as a stream type for identifying a compression codec of a stream, a stream PID, and stream attribute information (such as a frame rate or an aspect ratio). The stream descriptors are equal in number to the number of streams in the multiplexed data.

When the multiplexed data is recorded on a recording medium and others, it is recorded together with multiplexed data information files.

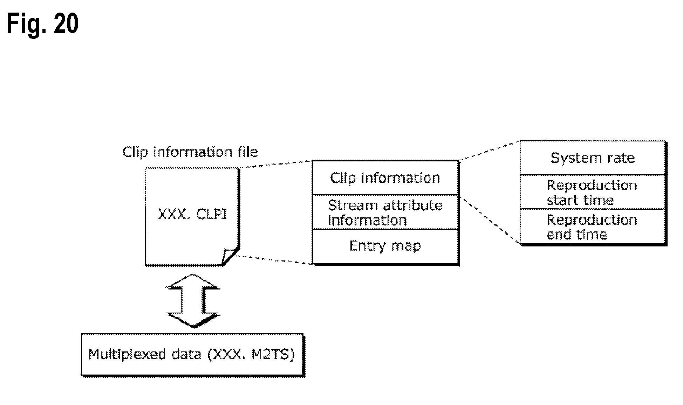

Each of the multiplexed data information files is management information of the multiplexed data as shown in Figure 20. The multiplexed data information files are in one to one correspondence with the multiplexed data, and each of the files includes multiplexed data information, stream attribute information, and an entry map.

As illustrated in Figure 20, the multiplexed data includes a system rate, a reproduction start time, and a reproduction end time. The system rate indicates the maximum transfer rate at which a system target decoder to be described later transfers the multiplexed data to a PID filter. The intervals of the ATSs included in the multiplexed data are set to not higher than a system rate. The reproduction start time indicates a PTS in a video frame at the head of the multiplexed data. An interval of one frame is added to a PTS in a video frame at the end of the multiplexed data, and the PTS is set to the reproduction end time.

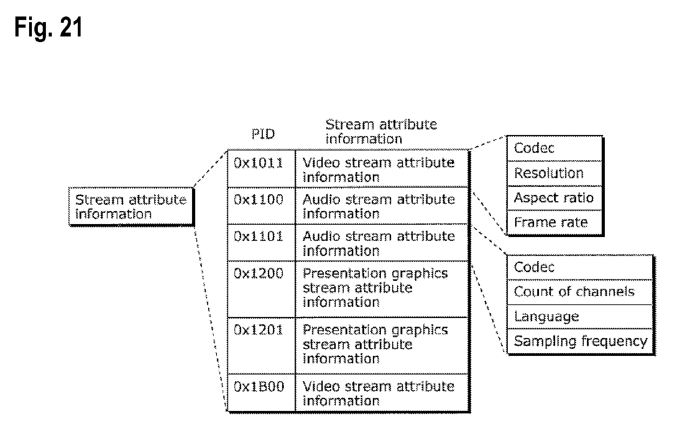

As shown in Figure 21, a piece of attribute information is registered in the stream attribute information, for each PID of each stream included in the multiplexed data. Each piece of attribute information has different information depending on whether the corresponding stream is a video stream, an audio stream, a presentation graphics stream, or an interactive graphics stream. Each piece of video stream attribute information carries information including what kind of compression codec is used for compressing the video stream, and the resolution, aspect ratio and frame rate of the pieces of picture data that is included in the video stream. Each piece of audio stream attribute information carries information including what kind of compression codec is used for compressing the audio stream, how many channels are included in the audio stream, which language the audio stream supports, and how high the sampling frequency is. The video stream attribute information and the audio stream attribute information are used for initialization of a decoder before the player plays back the information.

The multiplexed data to be used is of a stream type included in the PMT. Furthermore, when the multiplexed data is recorded on a recording medium, the video stream attribute information included in the multiplexed data information is used. More specifically, the video coding method or the video coding apparatus described in each of embodiments includes a step or a unit for allocating unique information indicating video data generated by the video coding method or the video coding apparatus in each of embodiments, to the stream type included in the PMT or the video stream attribute information. With the configuration, the video data generated by the video coding method or the video coding apparatus described in each of embodiments can be distinguished from video data that conforms to another standard.

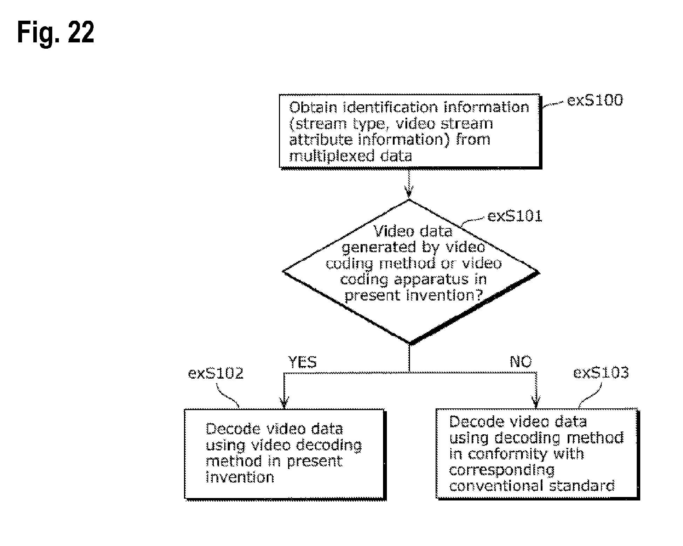

Furthermore, Figure 22 illustrates steps of the video decoding method. In Step exS100, the stream type included in the PMT or the video stream attribute information is obtained from the multiplexed data. Next, in Step exS101, it is determined whether or not the stream type or the video stream attribute information indicates that the multiplexed data is generated by the video coding method or the video coding apparatus in each of embodiments. When it is determined that the stream type or the video stream attribute information indicates that the multiplexed data is generated by the video coding method or the video coding apparatus in each of embodiments, in Step exS102, decoding is performed by the video decoding method in each of embodiments. Furthermore, when the stream type or the video stream attribute information indicates conformance to the conventional standards, such as MPEG-2, H.264/AVC, and VC-1, in Step exS103, decoding is performed by a video decoding method in conformity with the conventional standards.

As such, allocating a new unique value to the stream type or the video stream attribute information enables determination whether or not the video decoding method or the video decoding apparatus that is described in each of embodiments can perform decoding. Even when multiplexed data that conforms to a different standard, an appropriate decoding method or apparatus can be selected. Thus, it becomes possible to decode information without any error. Furthermore, the video coding method or apparatus, or the video decoding method or apparatus can be used in the devices and systems described above.

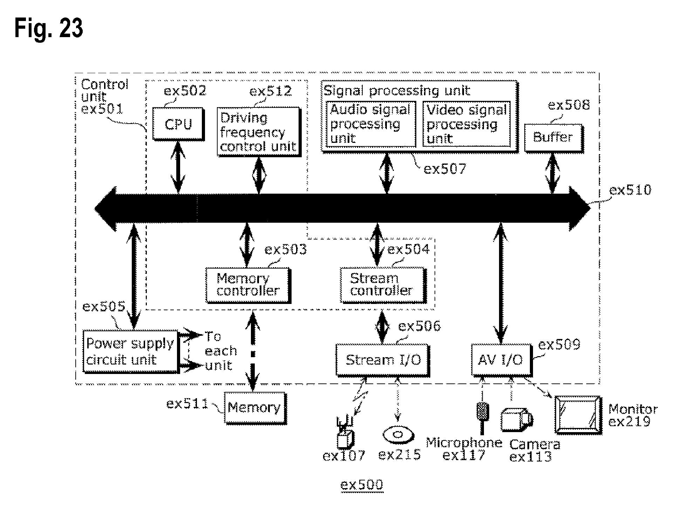

Each of the video coding method, the video coding apparatus, the video decoding method, and the video decoding apparatus in each of embodiments is typically achieved in the form of an integrated circuit or a Large Scale Integrated (LSI) circuit. As an example of the LSI, Figure 23 illustrates a configuration of the LSI ex500 that is made into one chip. The LSI ex500 includes elements ex501, ex502, ex503, ex504, ex505, ex506, ex507, ex508, and ex509 to be described below, and the elements are connected to each other through a bus ex510. The power supply circuit unit ex505 is activated by supplying each of the elements with power when the power supply circuit unit ex505 is turned on.

For example, when coding is performed, the LSI ex500 receives an AV signal from a microphone ex117, a camera ex113, and others through an AV 10 ex509 under control of a control unit ex501 including a CPU ex502, a memory controller ex503, a stream controller ex504, and a driving frequency control unit ex512. The received AV signal is temporarily stored in an external memory ex511, such as an SDRAM. Under control of the control unit ex501, the stored data is segmented into data portions according to the processing amount and speed to be transmitted to a signal processing unit ex507. Then, the signal processing unit ex507 codes an audio signal and/or a video signal. Here, the coding of the video signal is the coding described in each of embodiments. Furthermore, the signal processing unit ex507 sometimes multiplexes the coded audio data and the coded video data, and a stream 10 ex506 provides the multiplexed data outside. The provided multiplexed data is transmitted to the base station ex107, or written on the recording media ex215. When data sets are multiplexed, the data should be temporarily stored in the buffer ex508 so that the data sets are synchronized with each other.

Although the memory ex511 is an element outside the LSI ex500, it may be included in the LSI ex500. The buffer ex508 is not limited to one buffer, but may be composed of buffers. Furthermore, the LSI ex500 may be made into one chip or a plurality of chips.

Furthermore, although the control unit ex510 includes the CPU ex502, the memory controller ex503, the stream controller ex504, the driving frequency control unit ex512, the configuration of the control unit ex510 is not limited to such. For example, the signal processing unit ex507 may further include a CPU. Inclusion of another CPU in the signal processing unit ex507 can improve the processing speed. Furthermore, as another example, the CPU ex502 may serve as or be a part of the signal processing unit ex507, and, for example, may include an audio signal processing unit. In such a case, the control unit ex501 includes the signal processing unit ex507 or the CPU ex502 including a part of the signal processing unit ex507.

The name used here is LSI, but it may also be called IC, system LSI, super LSI, or ultra LSI depending on the degree of integration.

Moreover, ways to achieve integration are not limited to the LSI, and a special circuit or a general purpose processor and so forth can also achieve the integration. Field Programmable Gate Array (FPGA) that can be programmed after manufacturing LSIs or a reconfigurable processor that allows re-configuration of the connection or configuration of an LSI can be used for the same purpose.

In the future, with advancement in semiconductor technology, a brand-new technology may replace LSI. The functional blocks can be integrated using such a technology. The possibility is that the present invention is applied to biotechnology.

When video data generated in the video coding method or by the video coding apparatus described in each of embodiments is decoded, compared to when video data that conforms to a conventional standard, such as MPEG-2, H.264/AVC, and VC-1 is decoded, the processing amount probably increases. Thus, the LSI ex500 needs to be set to a driving frequency higher than that of the CPU ex502 to be used when video data in conformity with the conventional standard is decoded. However, when the driving frequency is set higher, there is a problem that the power consumption increases.

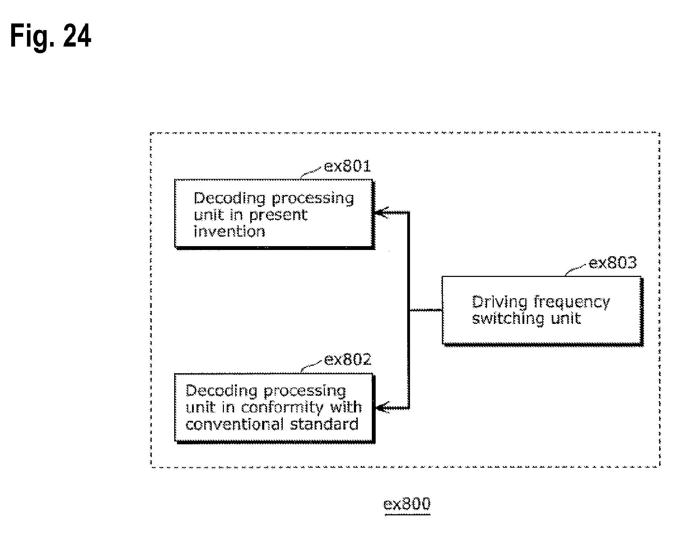

In order to solve the problem, the video decoding apparatus, such as the television ex300 and the LSI ex500 is configured to determine to which standard the video data conforms, and switch between the driving frequencies according to the determined standard. Figure 24 illustrates a configuration ex800. A driving frequency switching unit ex803 sets a driving frequency to a higher driving frequency when video data is generated by the video coding method or the video coding apparatus described in each of embodiments. Then, the driving frequency switching unit ex803 instructs a decoding processing unit ex801 that executes the video decoding method described in each of embodiments to decode the video data. When the video data conforms to the conventional standard, the driving frequency switching unit ex803 sets a driving frequency to a lower driving frequency than that of the video data generated by the video coding method or the video coding apparatus described in each of embodiments. Then, the driving frequency switching unit ex803 instructs the decoding processing unit ex802 that conforms to the conventional standard to decode the video data.

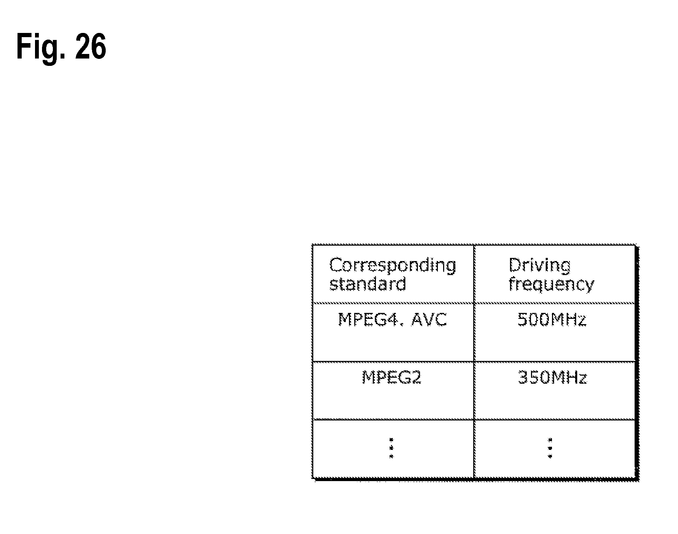

More specifically, the driving frequency switching unit ex803 includes the CPU ex502 and the driving frequency control unit ex512 in Figure 23. Here, each of the decoding processing unit ex801 that executes the video decoding method described in each of embodiments and the decoding processing unit ex802 that conforms to the conventional standard corresponds to the signal processing unit ex507 in Figure 21. The CPU ex502 determines to which standard the video data conforms. Then, the driving frequency control unit ex512 determines a driving frequency based on a signal from the CPU ex502. Furthermore, the signal processing unit ex507 decodes the video data based on the signal from the CPU ex502. For example, the identification information described is probably used for identifying the video data. The identification information is not limited to the one described above but may be any information as long as the information indicates to which standard the video data conforms. For example, when which standard video data conforms to can be determined based on an external signal for determining that the video data is used for a television or a disk, etc., the determination may be made based on such an external signal. Furthermore, the CPU ex502 selects a driving frequency based on, for example, a look-up table in which the standards of the video data are associated with the driving frequencies as shown in Figure 26. The driving frequency can be selected by storing the look-up table in the buffer ex508 and in an internal memory of an LSI, and with reference to the look-up table by the CPU ex502.

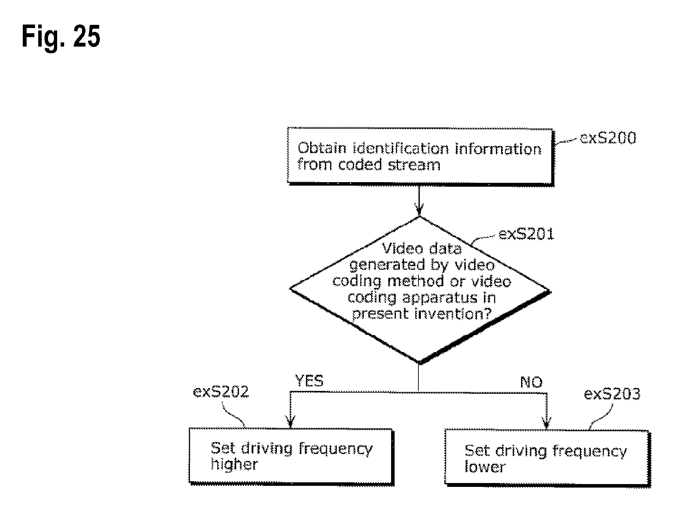

Figure 25 illustrates steps for executing a method. First, in Step exS200, the signal processing unit ex507 obtains identification information from the multiplexed data. Next, in Step exS201, the CPU ex502 determines whether or not the video data is generated by the coding method and the coding apparatus described in each of embodiments, based on the identification information. When the video data is generated by the video coding method and the video coding apparatus described in each of embodiments, in Step exS202, the CPU ex502 transmits a signal for setting the driving frequency to a higher driving frequency to the driving frequency control unit ex512. Then, the driving frequency control unit ex512 sets the driving frequency to the higher driving frequency. On the other hand, when the identification information indicates that the video data conforms to the conventional standard, such as MPEG-2, H.264/AVC, and VC-1, in Step exS203, the CPU ex502 transmits a signal for setting the driving frequency to a lower driving frequency to the driving frequency control unit ex512. Then, the driving frequency control unit ex512 sets the driving frequency to the lower driving frequency than that in the case where the video data is generated by the video coding method and the video coding apparatus described in each of embodiment.

Furthermore, along with the switching of the driving frequencies, the power conservation effect can be improved by changing the voltage to be applied to the LSI ex500 or an apparatus including the LSI ex500. For example, when the driving frequency is set lower, the voltage to be applied to the LSI ex500 or the apparatus including the LSI ex500 is probably set to a voltage lower than that in the case where the driving frequency is set higher.

Furthermore, when the processing amount for decoding is larger, the driving frequency may be set higher, and when the processing amount for decoding is smaller, the driving frequency may be set lower as the method for setting the driving frequency. Thus, the setting method is not limited to the ones described above. For example, when the processing amount for decoding video data in conformity with H.264/AVC is larger than the processing amount for decoding video data generated by the video coding method and the video coding apparatus described in each of embodiments, the driving frequency is probably set in reverse order to the setting described above.

Furthermore, the method for setting the driving frequency is not limited to the method for setting the driving frequency lower. For example, when the identification information indicates that the video data is generated by the video coding method and the video coding apparatus described in each of embodiments, the voltage to be applied to the LSI ex500 or the apparatus including the LSI ex500 is probably set higher. When the identification information indicates that the video data conforms to the conventional standard, such as MPEG-2, H.264/AVC, and VC-1, the voltage to be applied to the LSI ex500 or the apparatus including the LSI ex500 is probably set lower. As another example, when the identification information indicates that the video data is generated by the video coding method and the video coding apparatus described in each of embodiments, the driving of the CPU ex502 does not probably have to be suspended. When the identification information indicates that the video data conforms to the conventional standard, such as MPEG-2, H.264/AVC, and VC-1, the driving of the CPU ex502 is probably suspended at a given time because the CPU ex502 has extra processing capacity. Even when the identification information indicates that the video data is generated by the video coding method and the video coding apparatus described in each of embodiments, in the case where the CPU ex502 has extra processing capacity, the driving of the CPU ex502 is probably suspended at a given time. In such a case, the suspending time is probably set shorter than that in the case where when the identification information indicates that the video data conforms to the conventional standard, such as MPEG-2, H.264/AVC, and VC-1.

Accordingly, the power conservation effect can be improved by switching between the driving frequencies in accordance with the standard to which the video data conforms. Furthermore, when the LSI ex500 or the apparatus including the LSI ex500 is driven using a battery, the battery life can be extended with the power conservation effect.

There are cases where a plurality of video data that conforms to different standards, is provided to the devices and systems, such as a television and a mobile phone. In order to enable decoding the plurality of video data that conforms to the different standards, the signal processing unit ex507 of the LSI ex500 needs to conform to the different standards. However, the problems of increase in the scale of the circuit of the LSI ex500 and increase in the cost arise with the individual use of the signal processing units ex507 that conform to the respective standards.

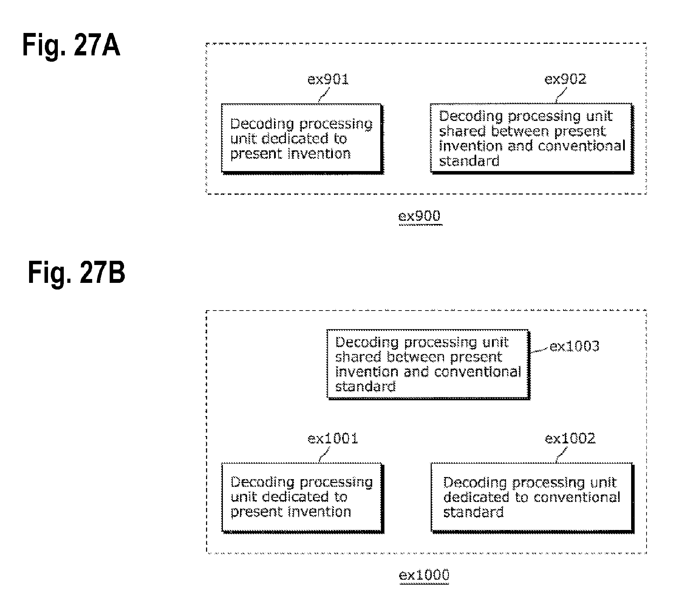

In order to solve the problem, what is conceived is a configuration in which the decoding processing unit for implementing the video decoding method described in each of embodiments and the decoding processing unit that conforms to the conventional standard, such as MPEG-2, H.264/AVC, and VC-1 are partly shared. Ex900 in Figure 27A shows an example of the configuration. For example, the video decoding method described in each of embodiments and the video decoding method that conforms to H.264/AVC have, partly in common, the details of processing, such as entropy coding, inverse quantization, deblocking filtering, and motion compensated prediction. The details of processing to be shared may include use of a decoding processing unit ex902 that conforms to H.264/AVC. In contrast, a dedicated decoding processing unit ex901 is probably used for other processing unique to the present invention. Since the present invention is characterized by determining the internal image size and padding with respect to the input image size, for example, the dedicated decoding processing unit ex901 is used therefor. Otherwise, the decoding processing unit is probably shared for one of the entropy decoding, inverse quantization, spatial or motion compensated prediction, or all of the processing. The decoding processing unit for implementing the video decoding method described in each of embodiments may be shared for the processing to be shared, and a dedicated decoding processing unit may be used for processing unique to that of H.264/AVC or HEVC.

Furthermore, ex1000 in Figure 27B shows another example in that processing is partly shared. This example uses a configuration including a dedicated decoding processing unit ex1001 that supports the processing unique to the present invention, a dedicated decoding processing unit ex1002 that supports the processing unique to another conventional standard, and a decoding processing unit ex1003 that supports processing to be shared between the video decoding method in the present invention and the conventional video decoding method. Here, the dedicated decoding processing units ex1001 and ex1002 are not necessarily specialized for the processing of the present invention and the processing of the conventional standard, respectively, and may be the ones capable of implementing general processing. Furthermore, the configuration can be implemented by the LSI ex500.

As such, reducing the scale of the circuit of an LSI and reducing the cost are possible by sharing the decoding processing unit for the processing to be shared between the video decoding method in the present invention and the video decoding method in conformity with the conventional standard.

Most of the examples have been outlined in relation to an H.264/AVC based video coding system or HEVC, and the terminology mainly relates to the H.264/AVC/HEVC terminology. However, this terminology and the description of the various embodiments with respect to H.264/AVC based coding is not intended to limit the principles and ideas of the invention to such systems. Also the detailed explanations of the encoding and decoding in compliance with the H.264/AVC or HEVC standard are intended to better understand the exemplary embodiments described herein and should not be understood as limiting the invention to the described specific implementations of processes and functions in the video coding. Nevertheless, the improvements proposed herein may be readily applied in the video coding described. Furthermore the concept of the invention may be also readily used in the enhancements of H.264/AVC coding currently discussed by the JCT-VC.

Summarizing, the present invention relates to image and/or video coding and decoding. In particular, the present invention relates to supporting any input image size of image input to the encoder even when the encoder works block-wisely and requires for the purposes of encoding an internal image size being an integer multiple of a predefined block size. In order to enable encoder and decoder working compatibly, the number of padding pixels inserted in the encoder is calculated in the same way at the encoder and the decoder. At the decoder, the calculated number of pixels is cropped from the decoded image. The calculation relies on the size of the image before padding and the size of a smallest coding unit (block), which are typically signaled within the bit-stream of the coded image/video.

**Claims**

1. A method for decoding a bit-stream including a padded digital image divided to a plurality of coding units, each coding unit including a plurality of pixels, the method comprising the steps of:

   extracting (510) from the bit-stream a size of an image;
   extracting (520) from the bit-stream a size of a smallest coding unit;
   calculating (530), based on the extracted size of the image, a number of padding rows and/or columns by assuming that the size of the padded image is an integer multiple of the size of the smallest coding unit;
   decoding (540) the padded image; and
   cutting-off (550) from the decoded image the calculated number of padding rows and/or columns of pixels.

2. A method according to claim 1, further comprising the step of:

   extracting (520) from the bit-stream a padding indicator for indicating a number of padding smallest coding units for the vertical and/or horizontal direction, wherein
   the number of padding rows and/or columns of pixels to be cropped from the decoded padded digital image is equal to or larger than the extracted number of padding smallest coding units in the respective vertical and/or horizontal direction, multiplied by the respective vertical and/or horizontal size of the smallest coding unit.

3. A method according to claim 2 or 3, further comprising the step of:

   extracting (520) from the bit-stream a flag indicating from which of at least one of the left, right, top, and/or bottom side of the image the calculated number of padding rows and/or columns is to be cropped, wherein the number of padding rows and/or columns of pixels is cut off from the indicated at least one of the left, right, top, and/or bottom side of the image, or
   using a predefined convention for cropping (550) the calculated number of padding rows and columns to be cropped from the respective right and bottom image boundary, assuming that vertical cropping is performed only on the bottom of the image and horizontal cropping is performed only on the right border of the image.

4. A method for coding a digital image divided to a plurality of coding units, each coding unit including a plurality of pixels, the method comprising the steps of:

   determining (610) a size of a digital image to be coded;
   calculating (620) a number of padding rows and/or columns of pixels for padding the digital image so that the padded image size is an integer-multiple of a size of the smallest coding unit;
   padding (630) the digital image with the calculated number of padding rows and/or columns of pixels;
   coding (640) the padded image;
   embedding (650) into the bit stream the size of the digital image before padding;

embedding (660) into the bit-stream the size of a smallest coding unit.

5. A method for coding according to claim 4, wherein:

the step of calculating (620) further includes determining a number of padding smallest coding units for padding in the vertical and/or horizontal direction and calculating a number of padding rows and/or columns of pixels being at least equal to or larger than the determined number of padding smallest coding units in the respective vertical and/or horizontal direction, multiplied by the respective vertical and/or horizontal size of the smallest coding unit, and

the method further comprises embedding (650) into the bit-stream a padding indicator indicating the calculated number of padding smallest coding for the vertical and/or horizontal direction.

6. A method for coding according to claim 5 or 6, further comprising:

embedding into the bit-stream a flag indicating to which of at least one of the left, right, top, and/or bottom side of the image the calculated number of padding rows and/or columns is to be padded, and padding the digital image with the calculated number of padding rows and/or columns of pixels at the indicated at least one of the left, right, top and/or bottom side of the image, or

using a predefined convention for padding (630) the calculated number of padding rows and columns to be padded to the respective right and bottom image boundary, assuming that vertical padding is performed only on the bottom of the image and horizontal padding is performed only on the right border of the image.

7. A method according to any of claims 2, 3, 5, or 6, wherein the number of padding smallest coding units and/or a flag indicating, to which of at least one of the left, right, top, and/or bottom side of the image the calculated number of padding rows and/or columns is padded, is embedded within the bitstream as a part of a picture specific parameter set or a sequence specific parameter set.

8. A computer program product comprising a computer-readable medium having a computer-readable program code embodied thereon, the program code being adapted to carry out the method according to any of claims 1 to 7.

9. An apparatus for decoding a bit-stream including a padded digital image divided to a plurality of coding units, each coding unit including a plurality of pixels, the apparatus comprising:

a bit-stream parsing unit (710) for extracting from the bit-stream a size of the image and a size of a smallest coding unit;

a padding calculation unit (720) for calculating, based on the extracted size of the image, a number of padding rows and/or columns by assuming that the size of the padded image is an integer multiple of the size of the smallest coding unit;

an image decoder (730) for decoding the padded image; and

a cropping unit (740) for cutting-off from the decoded image the calculated number of padding rows and/or columns of pixels.

10. An apparatus according to claim 9, wherein:

the bit-stream parsing unit (710) is configured to extract from the bit-stream a padding indicator for indicating a number of padding smallest coding units for the vertical and/or horizontal direction, and

the padding calculation unit (720) is configured to calculate the number of padding rows and/or columns of pixels to be cropped from the decoded padded digital image to be equal to or larger than the extracted number of padding smallest coding units in the respective vertical and/or horizontal direction, multiplied by the respective vertical and/or horizontal size of the smallest coding unit.

11. An apparatus according to claim 9 or 10, wherein:

the bit-stream parsing unit (710) is configured to extract from the bit-stream a flag indicating from which of at least one of the left, right, top, and/or bottom side of the image the calculated number of padding rows and/or columns is to be cropped, and the cropping unit (740) is configured to cut-off the calculated number of padding rows and/or columns of pixels from the indicated at least one of the left, right, top, and/or bottom side of the image, or

the cropping unit (740) is configured to use a predefined convention for cropping the calculated number of padding rows and columns to be cropped from the respective right and bottom image boundary, assuming that vertical cropping is performed only on the bottom of the image and horizontal cropping is performed only on the right border of the image.

12. An apparatus for coding a digital image divided to a plurality of coding units, each coding unit including a plurality of pixels the apparatus comprising:

a padding calculation unit (820) for calculating, based on a size of a digital image to be coded, a number of padding rows and/or columns of pixels for padding the digital image so that the padded image size is an integer-multiple of a size of the smallest coding unit;
a padding unit (830) for padding the digital image with the calculated number of padding rows and/or columns of pixels;
an image coder (840) for coding the padded image; and
a bit-stream forming unit (810) for embedding into the bit stream the determined size of the digital image before padding and the size of a smallest coding unit.

13. An apparatus for coding according to claim 12, wherein:

the padding calculation unit (820) is further configured to determine a number of padding smallest coding units for padding in the vertical and/or horizontal direction and to calculate a number of padding rows and/or columns of pixels being at least equal to or larger than the determined number of padding smallest coding units in the respective vertical and/or horizontal direction, multiplied by the respective vertical and/or horizontal size of the smallest coding unit, and
the bit-stream forming unit (810) is further configured to embed a padding indicator indicating the calculated number of padding smallest coding units for the vertical and/or horizontal direction into the bit-stream.

14. An apparatus for coding according to claim 12 or 13, wherein:

the bitstream forming unit (810) is further configured to embed into the bit-stream a flag indicating to which of at least one of the left, right, top, and/or bottom side of the image the calculated number of padding rows and/or columns is to be padded, and the padding unit (830) is further configured to pad the digital image with the calculated number of padding rows and/or columns of pixels at the indicated at least one of the left, right, top and/or bottom side of the image, or
the padding unit (830) is further configured to use a predefined convention for padding the calculated number of padding rows and columns to be padded to the respective right and bottom image boundary, assuming that vertical padding is performed only on the bottom of the image and horizontal padding is performed only on the right border of the image.

15. An apparatus according to any of claims 9, 10, 13, or 14, wherein the number of padding smallest coding units and/or a flag indicating to which of at least one of the left, right, top, and/or bottom side of the image the calculated number of padding rows and/or columns is padded, is embedded within the bitstream as a part of a picture specific parameter set or a sequence specific parameter set.

# Fig. 1

**Fig. 2**

**Fig. 3**

# Fig. 4A

400a    pad_right=0    430    420

SCU

# Fig. 4B

400b    pad_right=1    440

2 SCUs

**Fig. 5**

```
      decoding
          │
          ▼
    read picture size ──── 510
          │
          ▼
   read smallest CU size ──── 520
   (and # of padding SCUs)
          │
          ▼
   determine padding ──── 530
          │
          ▼
   picture decoding ──── 540
          │
          ▼
      cropping ──── 550
          │
          ▼
        end
```

**Fig. 6**

```
       coding
          │
          ▼
  determine image size ──── 610
          │
          ▼
   determine padding ──── 620
          │
          ▼
       padding ──── 630
          │
          ▼
    picture coding ──── 640
          │
          ▼
   insert picture size ──── 650
          │
          ▼
  insert smallest CU size ──── 660
  (and # of padding SCUs)
          │
          ▼
        end
```

**Fig. 7**

**Fig. 8**

# Fig. 9

Streaming server ex103

LSI ex500

Camera ex116

Computer ex111

ex106

ex107

Game machine ex115

ex108

PDA ex112

Internet ex101

Telephone network ex104

ex109

Camera ex113

Internet service provider ex102

ex110

ex100

Cellular phone ex114

# Fig. 10

ex214

Monitor ex213

Reproduction apparatus ex212

Broadcast satellite ex202

Cellular phone ex114

Antenna ex204

Antenna ex205

Car ex210

Broadcast station ex201

Cable ex203

Car navigation system ex211

ex215

Monitor ex219

STB ex217

SD ex216

Television ex300

Reader/recorder ex218

ex200

EP 2 533 537 A1

## Fig. 11

**Fig. 12**

**Fig. 13**

Optical disk
ex215

Recording blocks
ex231

Information track
ex230

| | |
|---|---|
| Inner circumference area | ex232 |
| Data recording area | ex233 |
| Outer circumference area | ex234 |

# Fig. 14A

Antenna ex350

Audio output unit ex357

Display unit ex358

Camera unit ex365

Operation key unit ex366

Slot unit ex364

ex216

SD

ex114

## Fig. 14B

# Fig. 15

| |
|---|
| Video stream (PID=0x1011 Primary video) |
| Audio stream (PID=0x1100) |
| Audio stream (PID=0x1101) |
| Presentation graphics stream (PID=0x1200) |
| Presentation graphics stream (PID=0x1201) |
| Interactive graphics stream (PID=0x1400) |
| Video stream (PID=0x1B00 Secondary video) |
| Video stream (PID=0x1B01 Secondary video) |

**Fig. 16**

Video frame stream

Audio frame stream

ex235

ex236

ex237

ex238

ex239

ex240

Multiplexed data
ex247

ex243

ex242

ex241

ex246

ex245

ex244

Presentation graphics stream

Interactive graphics stream

Fig. 17

Video frame stream

| I picture | P picture | B picture | B picture | P picture | B picture | · · · |

yy1    yy2    yy3    yy4

Stream of
PES packets

| | I picture | | | P picture | | | B picture | | | B picture | · · · |

PES      PES
header   payload

# Fig. 18

Stream of TS packets

TS header
(4 Byte)  TS payload
(184 Byte)

Stream of
source packets

TP_extra_header  TS packet
(4 Byte)  (188 Byte)

Multiplexed data

SPN 0 1 2 3 4 5 6 7  · · ·

Source packet

## Fig. 19

Data structure of PMT

| PMT header |
|---|
| Descriptor#1 |
| . . . |
| Descriptor#N |
| Stream information#1 |
| . . . |
| Stream information#N |

| Stream type |
|---|
| PID |
| Stream descriptor#1 |
| . . . |
| Stream descriptor#N |

# Fig. 20

Clip information file

XXX. CLPI

Multiplexed data (XXX. M2TS)

| Clip information |
| Stream attribute information |
| Entry map |

| System rate |
| Reproduction start time |
| Reproduction end time |

# Fig. 21

# Fig. 22

Obtain identification information (stream type, video stream attribute information) from multiplexed data — exS100

Video data generated by video coding method or video coding apparatus in present invention? — exS101

YES    NO

exS102

Decode video data using video decoding method in present invention

exS103

Decode video data using decoding method in conformity with corresponding conventional standard

# Fig. 23

**Fig. 24**

ex800

# Fig. 25

Obtain identification information from coded stream ───exS200

Video data generated by video coding method or video coding apparatus in present invention? ───exS201

YES ───── NO

exS202

exS203

Set driving frequency higher

Set driving frequency lower

# Fig. 26

| Corresponding standard | Driving frequency |
|---|---|
| MPEG4. AVC | 500MHz |
| MPEG2 | 350MHz |
| ⋮ | ⋮ |

**Fig. 27A**

ex901

Decoding processing unit dedicated to present invention

ex902

Decoding processing unit shared between present invention and conventional standard

ex900

**Fig. 27B**

Decoding processing unit shared between present invention and conventional standard

ex1003

ex1001

Decoding processing unit dedicated to present invention

ex1002

Decoding processing unit dedicated to conventional standard

ex1000

Europäisches
Patentamt

European
Patent Office

Office européen
des brevets

## EUROPEAN SEARCH REPORT

**Application Number**

EP 11 16 9587

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/103701 A1 (CHEON MIN-SU [KR]) 5 May 2011 (2011-05-05) * paragraphs [0061]-[0095], [0120], [0165]-[0168],[0205] * * figures 6, 14, 20A, 20B * ----- | 1-15 | INV. H04N7/26 H04N7/50 |
| A | BOSSEN F ET AL: "HEVC Reference Software Manual", 96. MPEG MEETING; 21-3-2011 - 25-3-2011; GENEVA; (MOTION PICTURE EXPERT GROUP OR ISO/IEC JTC1/SC29/WG11),, no. m20021, 15 March 2011 (2011-03-15), XP030048588, * the whole document * ----- | 1-15 | |
| A | JEON (LG) B ET AL: "Video coding technology proposal by LG Electronics", 1. JCT-VC MEETING; 15-4-2010 - 23-4-2010; DRESDEN; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. XP030007544, 13 April 2010 (2010-04-13), XP030007545, * page 6 - page 7; figure 5 * ----- | 1-15 | |

**TECHNICAL FIELDS SEARCHED (IPC)**

H04N

The present search report has been drawn up for all claims

| Place of search | Date of completion of the search | Examiner |
|---|---|---|
| Munich | 13 September 2011 | Montoneri, Fabio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 16 9587

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2011

| Patent document cited in search report | Publication date | Patent family member(s) | Publication date |
|---|---|---|---|
| US 2011103701 A1 | 05-05-2011 | WO 2011053050 A2<br>KR 20110047697 A | 05-05-2011<br>09-05-2011 |

EPO FORM P0459

For more details about this annex : see Official Journal of the European Patent Office, No. 12/82